# EUROPEAN PATENT SPECIFICATION

(11) **EP 2 171 972 B1**
(45) Date of publication and mention of the grant of the patent: **17.08.2016**
(21) Application number: 08754295.7
(22) Date of filing: 08.05.2008
(51) Int. Cl.: H04L 29/06

(54) **FILE PROTOCOL FOR TRANSACTION BASED COMMUNICATION**
DATEIPROTOKOLL FÜR DIE AUF TRANSAKTIONEN BASIERENDE KOMMUNIKATION
PROTOCOLE DE FICHIER POUR UNE COMMUNICATION BASÉE SUR DES TRANSACTIONS

(30) Priority: 08.06.2007 US 760686; 22.06.2007 US 945904 P; 28.06.2007 US 770697
(43) Date of publication of application: 07.04.2010
(73) Proprietor: APPLE INC., Cupertino, CA 95014 (US)
(72) Inventor: GALLOWAY, Curtis, C., Santa Cruz, CA 95062 (US); WRIGHT, John, Andrew, San Francisco, CA 94110 (US); GRAESSLEY, Joshua, Verweyst, Sunnyvale, CA 94085 (US); GIES, Sean, San Francisco, CA 94133 (US); CHINN, Paul, San Jose, CA 95125 (US)
(74) Representative: Keseris, Denis
(86) International application number: PCT/US2008/005949
(87) International publication number: WO 2008/153651

(56) References cited:
- EP-A- 1 569 491
- WO-A-99/39488
- WO-A-2006/133764
- US-A1- 2005 102 537
- ANDREW S. TANENBAUM: "COMPUTER NETWORKS - NETWORK SOFTWARE & REFRENCE MODELS" 1 January 1996 (1996-01-01), PRENTICE HALL PTR , UPPER SADDLE RIVER, NEW JERSEY 07458 , XP002500978 page 17 - page 38

## Description

### TECHNICAL FIELD

Embodiments of the invention relate to communicating data between devices. More particularly, embodiments of the invention relate to techniques for efficiently communicating data between one or more host electronic devices and an intermittently connected client device.

### BACKGROUND

With the increasing popularity of mobile devices (e.g., mobile phones, digital music players, digital personal assistants), the functionality provided by a single mobile device has increased. This increase in functionality has an associated motivation to provide synchronization services in order to, for example, mirror changes to data made on either the mobile device or the host device. Further, there may be a need to exchange data, including one or more files, between the two devices. For example, music or video files may be exchanged between the two devices.

Various techniques have been developed to synchronize data and/or exchange data between a mobile device and a host device. Current techniques are typically either full-function file system based techniques that may require more overhead than necessary or may be specific-purpose techniques that provide limited functionality. These techniques use existing interfaces such as USB.

Existing interfaces between devices, such as a USB interface on each device, have difficulty allowing a device to be attached to a USB (Universal Serial Bus) interface or port and then arbitrarily and abruptly removed/disconnected from the USB interface, particularly if the device is a storage device. Further, USB is not designed to support, in USB's standard communication protocol, Internet Protocol (IP) addresses; USB is not considered a network interface. USB is also not designed to support an arbitrary, virtually unlimited, number of multiple concurrent independent sessions for independent applications seeking to send, or waiting to receive, data through a USB interface and, for at least certain systems, the number of interfaces or sessions supported over a USB interface is static and cannot be changed over time. A USB interface may, for at least certain systems, support multiple concurrent "interfaces," which may be considered multiple sessions, but there is only a fixed number of these and the interfaces are static (and cannot change) for a device. On the other hand, USB is a common and useful interface, and it is often desirable to use such an interface to connect two systems such as a host and a client device.

Further background to the present invention may be found in the following patent applications: WO 99/39488 A1, which relates to a communications system for mobile data transfer, comprising a communications network, an application module and a separate terminal module, where data is transferred between the network and the application module via the terminal module, which hides network dependent operations such as error control from the application module; and WO 2006/133764 A2, which relates to a method for establishing a paired connection between first and second media devices across a network includes transmitting a first information message across the network including an identifier that includes a request to pair the first and second media devices.

### SUMMARY

This description relates to file protocols (e.g. file transfer protocols) for transaction based communication. In order to address at least some of the points above, there is provided a computer readable medium, a method and a data processing system as defined in the appended claim set. In one embodiment, a method to use a file transfer protocol includes receiving packets containing headers, the packets being received at a first network stack software through a non-network interface, such as a USB interface, and extracting data from the packets and reconstructing a file from data in the packets. The extracting may be performed by a first network stack software, and the headers contain data for flow control and sequencing and data identifying ports for sending and receiving file transfer applications; the data in the headers allow multiple independent applications, including file transfer applications and others, to maintain multiple concurrent sessions through the interface, which may be a USB compliant (wired or wireless) or BLUETOOTH compliant interface. The method may further include validating the file after all data for the file has been received; the validating may be performed through the use of checksums and/or hash functions relative to the whole file. The packets containing portions of the file may include an indication of a packet type having a predetermined packet format and a packet functionality associated with the packet type.

The interface may be a USB wired or wireless interface (or a BLUETOOTH wireless interface) which has a standard protocol that does not use Internet Protocol (IP) addresses. The packets, transmitted through the non-network interface, may include Transmission Control Protocol (TCP) like headers and contain no IP compliant headers, and the TCP-like headers may specify port identifiers which are associated with opened sockets, which have been opened through the use of a socket API for interprocess communication between software modules. The method may also include creating further packets to contain the data extracted from the packets, and the further packets contain TCP/IP headers in which the IP header specifies a loopback address, and the data is extracted from the further packets and provided to the file transfer application. The creating of the further packets and the extracting of the data from the further packets may be performed by a TCP/IP stack software which is operatively coupled to a network interface from connecting to the Internet through an IP protocol.

Another embodiment includes a computer readable medium containing executable program instructions configured to be executed on a data processing system. The medium includes a first network stack software to create packets for transmission through a first interface (such as a WiFi or Ethernet or cellular telephone interface) on a device and to extract data from packets received through the first interface, and a second network stack software to create packets for transmission through a second interface (which may be a non-network interface such as a USB or BLUETOOTH interface) on the device and to extract data from packets received through the second interface, and a file transfer protocol software (such as a media player configured to transfer media files from one device to another device) operatively coupled to communicate with the first network stack software to receive the data extracted from the packets received through the second interface and to reconstruct a file from the data extracted from the packets. The second network stack software is configured to communicate with the first network stack software and the second interface is configured to be coupled to a third interface (e.g., another non-network interface such as a USB or BLUETOOTH interface) on another system (e.g., a host device). The second network stack software is configured to send data, extracted from packets received through the second interface, through the first network stack software and to the receiving file transfer protocol application. The second network stack software is configured to transmit and receive packets using a protocol designed for the second interface. The file transfer protocol software may validate the file after all the data for the file has been received (or it may validate the file in parts as it is received); the validation may be performed by using, for example, conventional checksum operations or hash operations. The packets may include information which is part of the file transfer protocol. For example, the packets may include an indication of a packet type having a predetermined packet format and a packet functionally associated with the packet type. The packet functionality may specify an operation of the file transfer protocol software. The packets created by the second network stack software may include Transmission Control Protocol (TCP) - like headers and no IP headers, and the TCP-like headers may be associated with (through port identifiers in the headers) an open socket for the file transfer protocol software. The first network stack software and the second network stack software are configured to allow multiple applications, including the file transfer protocol software, on the device to maintain multiple concurrent sessions through the second interface and wherein the file is an audio or audiovisual media file. The first network stack software may include a TCP/IP stack and the second network stack software may include a TCP-like stack which creates the TCP-like headers. The file transfer protocol software (or other software) may generate an error message or a status message in response to a failure to transfer a complete file (e.g., the USB connection is interrupted in the middle of a file transfer) and this message is later used to cause the file (and other data or files) to be transferred, in whole or in part (if the prior part which was transmitted was also successfully saved at the recipient's side) when connection is re-established. The error message or status message includes at least an identifier of the file which was only partially transferred before the connection was interrupted.

This specification also describes devices, systems, computer readable media, software architectures, and other methods.

In another embodiment, the communications link between devices (e.g. between a host and a device) is a Universal Serial Bus (USB) compliant wired or wireless interface. In another embodiment, the communications link between devices is a BLUETOOTH compliant wireless interface. In another embodiment, the communications link is an interface which is not a network interface.

In one example, the client device is a smartphone. In another example, the client device is a media playback device. In one example, the host device is a desktop computer system. In another example, the host device is a laptop computer system. In another example, the host device is a palmtop or ultra-mobile computer system.

### BRIEF DESCRIPTION OF THE DRAWINGS

The invention is illustrated by way of example, and not by way of limitation, in the figures of the accompanying drawings in which like reference numerals refer to similar elements.
Figure 1 is a block diagram of a host electronic device and client electronic device that may communicate utilizing the techniques described herein.
Figure 2 is a block diagram of one embodiment of a data processing system, such as a host device.
Figure 3 is a block diagram of one embodiment of a data processing system, such as a client device, a handheld computer or other type of data processing system.
**Figure 4** is a table of a packet header that may be used in communication between a host electronic device and a client electronic device.
**Figure 5** is a table of a packet types that may be used in communication between a host electronic device and a client electronic device.
**Figure 6** is a flow diagram of one embodiment of a technique to transfer data to a client device.
**Figure 7** is a flow diagram of one embodiment of a technique to synchronize data between a host device and a client device.
**Figure 8** shows an example of a software architecture for connecting two data processing systems referred to as a host and a device.
**Figure 9** is a flowchart which shows an example of a method, according to one embodiment of the invention, for exchanging data between two systems; the data may be files (e.g., MP3 files, video files, pictures, etc.) or structured date (such as contact information in a Address Book, or bookmarks/favorites, or calendar data, or notes, or To Do items, etc.) or other types of data (e.g. executable software such as widgets, etc.).
**Figure 10** shows a flowchart of an initialization method according to one embodiment of the invention.
**Figure 11** is a flowchart which shows an example of a method, according to one embodiment, for transferring data from a host to a device.
**Figure 12** is a flowchart which shows an example of a method, according to one embodiment, for transferring data from a device to a host.
**Figure 13** shows an example of an alternative software architecture for a host system.
**Figure 14A** shows a prior art example of a connection, using a Picture Transfer Protocol (PTP), through two USB interfaces.
**Figure 14B** shows an example of a connection according to one embodiment of the invention.
**Figure 15** is a flowchart which illustrates an example of a method according to one embodiment, for exchanging files between systems.

### DETAILED DESCRIPTION

In the following description, numerous specific details are set forth. However, embodiments of the invention may be practiced without these specific details. In other instances, well-known circuits, structures and techniques have not been shown in detail in order not to obscure the understanding of this description.

Described herein is a protocol for transferring files and other data between endpoints. In one embodiment, the endpoints are a host electronic device and a client electronic device. The host electronic device may be, for example, a desktop computer system or a laptop computer system. The client electronic device may be for example, a laptop computer system, a personal digital assistant, a cellular-enabled device (e.g., a cellular telephone or smartphone).

In one embodiment, the connection between the end points utilizes a reliable stream transport, for example, a Transmission Control Protocol (TCP) stream connection. Other stream connections may also be supported. In one embodiment, communication is accomplished utilizing packets that have a header and a body. Described herein in one embodiment of a standard minimum header, but a header may contain additional packet-specific structured data. The packet data may include unstructured data, or may be empty.

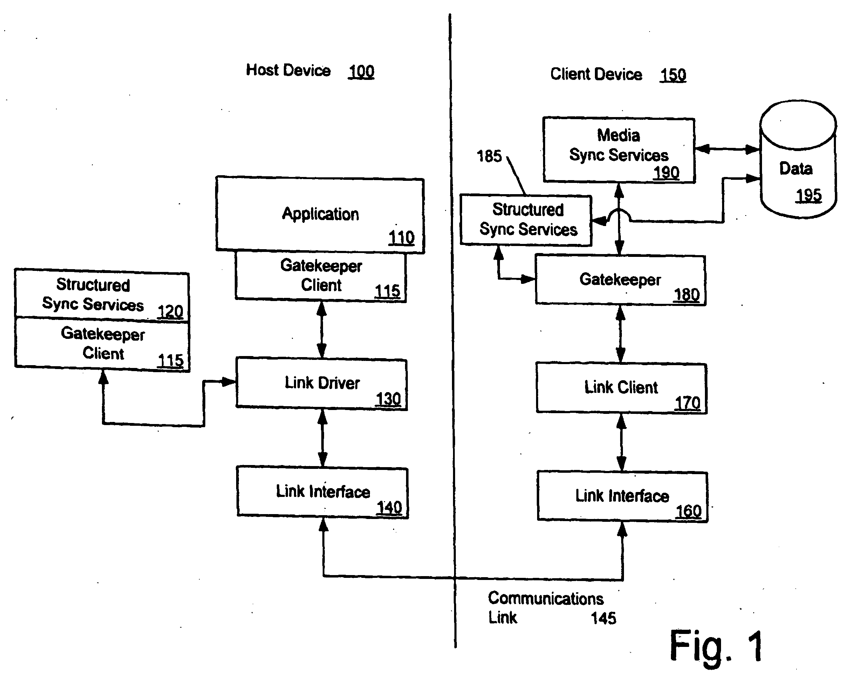

**Figure 1** is a block diagram of a host electronic device and client electronic device that may communicate utilizing the techniques described herein. The block diagram of **Figure** 1 provides a conceptual illustration of the components that may be utilized to communicate between host device 100 and client device 150. In one example, host device 100 is a computer system (e.g., a desktop or a laptop computer system) and client device 150 is a mobile device (e.g., a PDA or a smartphone). Host device 100 and client device 150 may communicate via any type of communications technique known in the art. For example, communications link 145 may be a physical cable (e.g., a Universal Serial Bus compliant cable), or a wireless communications link (e.g., Bluetooth® compliant or IEEE 802.11 compliant). Bluetooth® is a registered trademark owned by Bluetooth SIG, Inc.

Application 110 may be any type of application that may be executed by host device 100. For example, application 110 may be iTunes available from Apple Inc. of Cupertino, California. Application 110 may include functionality and/or data that may be communicated to and/or synchronized with client device 150. For example, application 110 may store and/or play multimedia content that may be stored on or played by client device 150. When client device 150 communicates with host device 100, application 110 may cause content to be transferred between host device 100 and client device 150. Other types of applications may also be supported.

Gatekeeper client 115 interacts with application 110 to control access to communications link 145 by application 110. Gatekeeper client 115 may selectively limit access to communications link 145 based on one or more parameters. Gatekeeper client 115 may, for example, perform authentication and/or validation operations prior to allowing communications between host device 100 and client device 150. Gatekeeper client 115 may also select one of multiple communications link for communication between host device 100 and client device 150. While the example of **Figure 1** is described with the gatekeeper functionality, alternate embodiments may be provided without the gatekeeper functionality.

Gatekeeper client 115 may communicate with link driver 130 to access communications link 145 via link interface 140. In one embodiment, link driver 130 interacts with structured sync services 120 to provide synchronization functionality between host device 100 and client device 150. In one embodiment, structured sync services 120 may function utilizing the commands and protocols described in greater detail below. Link driver 130 may cause link interface 140 to cause signals (e.g., electrical, radio frequency, infrared, optical) representing data to be transmitted over communications link 145.

Within client device 150, link interface 160 is the counterpart to link interface 140. Link interface 160 may send and/or receive signals (e.g., electrical, radio frequency, infrared, optical) via communications link 145. Client device 150 also includes gatekeeper 180 that may perform authentication, validation and/or other authorization functions before allowing communication between application 110 on host device 100 and media sync services 190 on client device 150.

In one embodiment, media sync services 190 may support the messages and protocols described in greater detail below to allow access (e.g., read, write, modify, update) of data 195. Data 195 represents any type of data stored on client device 150. Data 195 may be one or more databases, tables and/or other storage elements. Data 195 may be, for example, media files (e.g., audio and/or video data files), metadata, contact information, historical information (e.g., call logs, software version information) and/or status information (e.g., battery capacity, serial number, total memory, available memory).

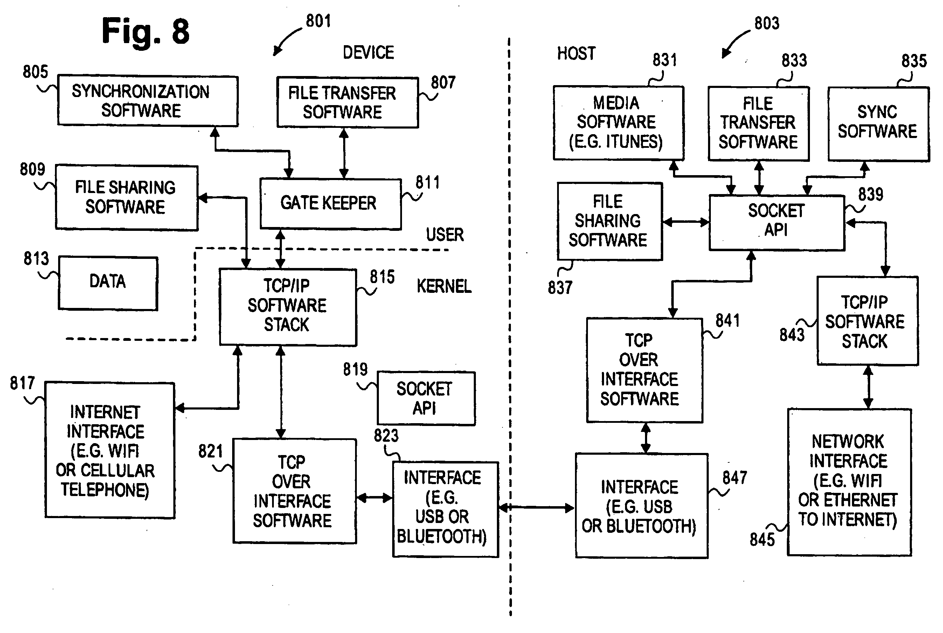

Client device 150 may also include structured data services 185, which may maintain data on client device 150. Examples of data that may be synchronized and/or maintained utilizing structured sync services 120 and structured data services 185 may include bookmarks, contact information, calendar information, etc. The structured sync services 120 may be the same as or similar to synchronization software 805 (in **Figure 8****),** and structured sync services 185 may be the same as or similar to sync software 835 (in **Figure 8****).**

In one embodiment, communication between host device 100 and client device 150 to allow application 110 to access data 190 may be accomplished through structured sync services 120 and media sync services 190 utilizing specific data packet formats described in greater detail below. In one embodiment, communications link 145 may be a Universal Serial Bus (USB) compliant wired communications link between host device 100 and client device 150. In one embodiment, the connection between host device 100 and client device 150 utilizes a TCP stream connection over the USB compliant physical connection to transmit the packets described below.

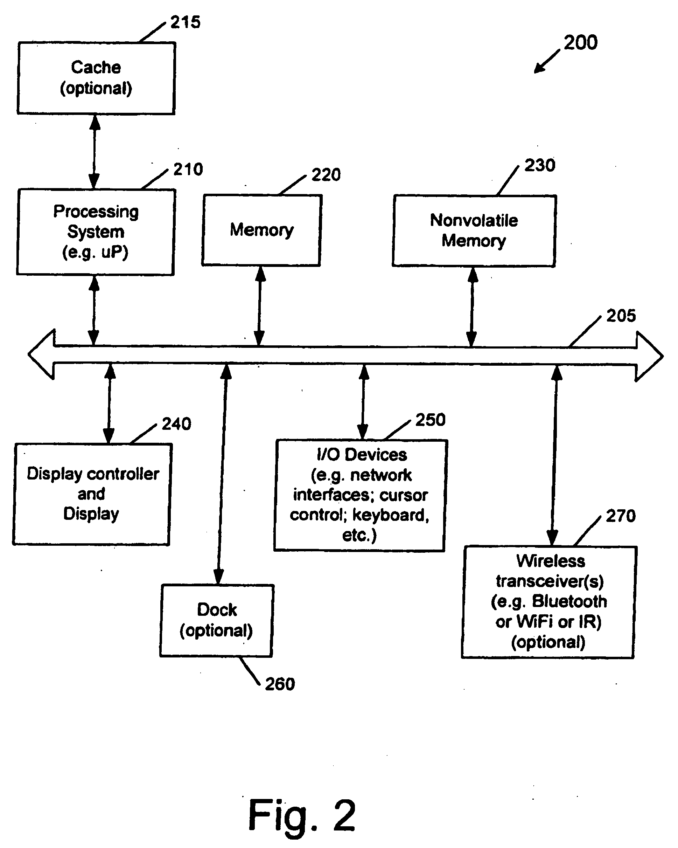

**Figure 2** is a block diagram of one embodiment of a data processing system, such as a host device. Note that while **Figure 2** illustrates various components of a computer system, it is not intended to represent any particular architecture or manner of interconnecting the components as such details are not germane to the present inventions. It will also be appreciated that personal digital assistants (PDAs), cellular telephones, media players (e.g. an iPod), devices which combine aspects or functions of these devices (a media player combined with a PDA and a cellular telephone in one device), network computers, an embedded processing device within another device, and other data processing systems which have fewer components or perhaps more components may also be used to implement one or more embodiments of the present inventions and may be one or more of the data processing systems described herein. The computer system shown in **Figure 2** may, for example, be a Macintosh computer from Apple Inc. or a computer which runs the Windows operating software from Microsoft Corporation.

Computer system 200 includes bus 205 which is coupled to one or more microprocessors which form processing system 210. Bus 205 is also coupled to memory 220 and to a non-volatile memory 230, which may be a magnetic hard drive in certain embodiments, or flash memory in other embodiments. Bus 205 is also coupled to display controller and display 240 and one or more input/output (I/O) devices 250.

Further, bus 205 may be coupled to optional dock 260 and to one or more wireless transceivers 270, which may be a Bluetooth® compliant transceiver or a WiFi compliant transceiver or an infrared transceiver. Wireless transceivers 270 are optional as shown in **Figure 2****.**

Processing system 210 may optionally be coupled to cache 215. Processing system 210 may include one or more microprocessors, such as a microprocessor from Intel or IBM. Bus 205 interconnects these various components together in a manner which is known in the art. Typically, the input/output devices 250 are coupled to the system through input/output controllers.

Memory 220 may be implemented as dynamic RAM (DRAM) which provides fast access to data but requires power continually in order to refresh or maintain the data in memory 220. Non-volatile memory 230 may be a magnetic hard drive or other non-volatile memory which retains data even after power is removed from the system. While **Figure 2** shows that non-volatile memory 230 is a local device coupled directly to the rest of the components in the data processing system, it will be appreciated that other embodiments may utilize a non-volatile memory which is remote from a system, such as a network storage device, which is coupled to the data processing system through a network interface, such as a modem or an Ethernet interface.

Bus 205, as is well known in the art, may include one or more buses connected to each other through various bridges, controllers, and/or adapters as is known in the art. In one embodiment, I/O controller 250 may include a USB compliant adapter for controlling USB compliant peripherals and an IEEE-1394 controller for IEEE-1394 compliant peripherals.

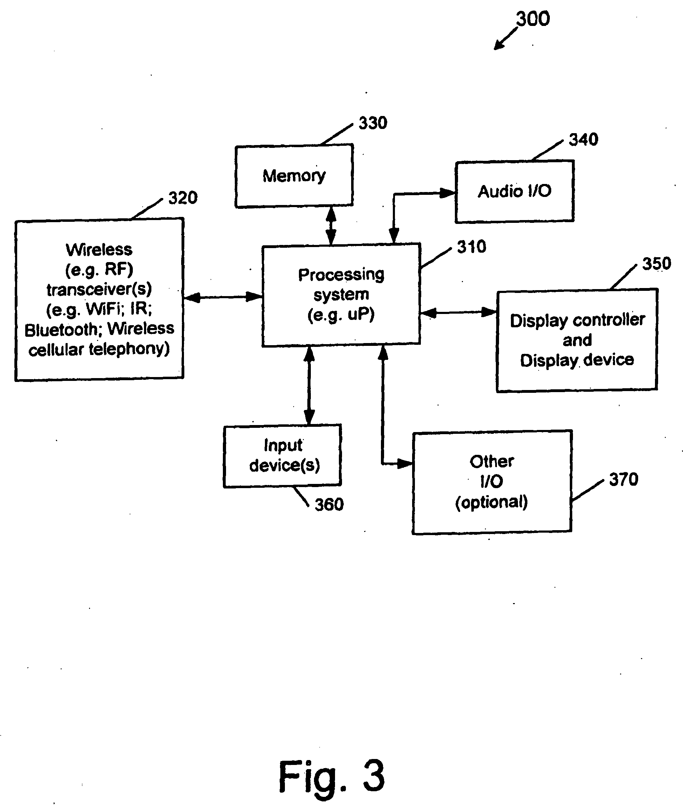

Aspects of the inventions described herein may be embodied, at least in part, in software. That is, the techniques may be carried out in a computer system or other data processing system in response to its processor or processing system executing sequences of instructions contained in a memory, such as memory 220 or non-volatile memory 230 or the memory 330 shown in **Figure 3****.** In various embodiments, hardwired circuitry may be used in combination with the software instructions to implement the present inventions. Thus, the techniques are not limited to any specific combination of hardware circuitry and software or to any particular source for the instructions executed by the data processing system. In addition, throughout this description, various functions and operations are described as being performed by or caused by software code to simplify description. However, what is meant by such expressions is that the functions result from execution of the code by a processing system.

Dock 260 and/or wireless transceivers 270 provide a physical interface for coupling the data processing system shown in **Figure 2** to another data processing system, such as the data processing system shown in **Figure 3****,** or to another data processing system which resembles the system shown in **Figure 2****.** Dock 260 may provide both a mechanical and electrical connection between one data processing system and another data processing system to allow a synchronization process to be performed between the two systems. In other embodiments, wireless transceivers 270 may provide a radio frequency (RF) connection between the two systems for the purpose of a synchronization process without providing a mechanical connection between the two systems.

**Figure 3** is a block diagram of one embodiment of a data processing system, such as a client device, a handheld computer or other type of data processing system, such as the system shown in **Figure 2** or a system which is similar to that shown in **Figure 3****.** Data processing system 300 includes processing system 310, which may be one or more microprocessors, or which may be a system on a chip integrated circuit. System 300 also includes memory 330 for storing data and programs for execution by processing system 310. System 300 also includes audio input/output subsystem 340 which may include a microphone and a speaker for, for example, playing back music or providing telephone functionality through the speaker and microphone.

Display controller and display device 350 provide a visual user interface for the user; this digital interface may include a graphical user interface which is similar to that shown on a Macintosh computer when running OS X operating system software. System 300 also includes one or more wireless transceivers, such as a WiFi transceiver, an infrared transceiver, a Bluetooth® compliant transceiver, and/or a wireless cellular telephony transceiver. Additional components, not shown, may also be part of system 300 in certain embodiments, and in certain embodiments fewer components than shown in **Figure 3** may also be used in a data processing system.

Data processing system 300 also includes one or more input devices 360 which are provided to allow a user to provide input to system 300. These input devices may be a keypad or a keyboard or a touch panel or a multi-touch panel. Data processing system 300 also includes optional input/output device 370 which may be a connector for a dock, such as dock 260 shown in **Figure 2****.**

One or more buses, not shown, may be used to interconnect the various components as is known in the art. Data processing system 300 may be a handheld computer or a personal digital assistant (PDA), or a cellular telephone with PDA-like functionality, or a handheld computer which includes a cellular telephone, or a media player, such as an iPod, or devices which combine aspects or functions of these devices, such as a media player combined with a PDA and a cellular telephone in one device. In other embodiments, data processing system 300 may be a network computer or an embedded processing device within another device, or other types of data processing systems which have fewer components or perhaps more components than that shown in **Figure 3****.**

At least certain embodiments of the inventions described herein may be part of a digital media player, such as a portable music and/or video media player, which may include a media processing system to present the media, a storage device to store the media and may further include a radio frequency (RF) transceiver (e.g., an RF transceiver for a cellular telephone) coupled with an antenna system and the media processing system. In certain embodiments, media stored on a remote storage device may be transmitted to the media player through the RF transceiver. The media may be, for example, one or more of music or other audio, still pictures, or motion pictures.

The portable media player may include a media selection device, such as a click wheel input device on an iPod® or iPod Nano® media player from Apple Inc. of Cupertino, CA, a touch screen input device, pushbutton device, movable pointing input device or other input device. The media selection device may be used to select the media stored on the storage device and/or the remote storage device.

The portable media player may, in at least certain embodiments, include a display device which is coupled to the media processing system to display titles or other indicators of media being selected through the input device and being presented, either through a speaker or earphone(s), or on the display device, or on both display device and a speaker or earphone(s).

In certain embodiments, data processing system 300 may be implemented in a small form factor which resembles a handheld computer having a tablet-like input device which may be a multi-touch input panel device which is integrated with a liquid crystal display.

In the following description, various software components which are used for both synchronization and non-synchronization processing operations are described. It will be understood that in at least certain embodiments, these various software components may be stored in memory 220 and/or memory 230 shown in **Figure 2** for one type of data processing system, and in the case of a system such as that shown in **Figure 3****,** these various different software components may be stored in the memory 330 which may include volatile memory as well as non-volatile memory, such as flash memory or a magnetic hard drive.

Having described a host device and a client device with example embodiments of each along with appropriate interconnections between devices, example packet formats, packet types, functionality and data flows are now described. As with the description above, the description that follows provides an example embodiment of a communications protocol. Variations on this protocol may also be supported.

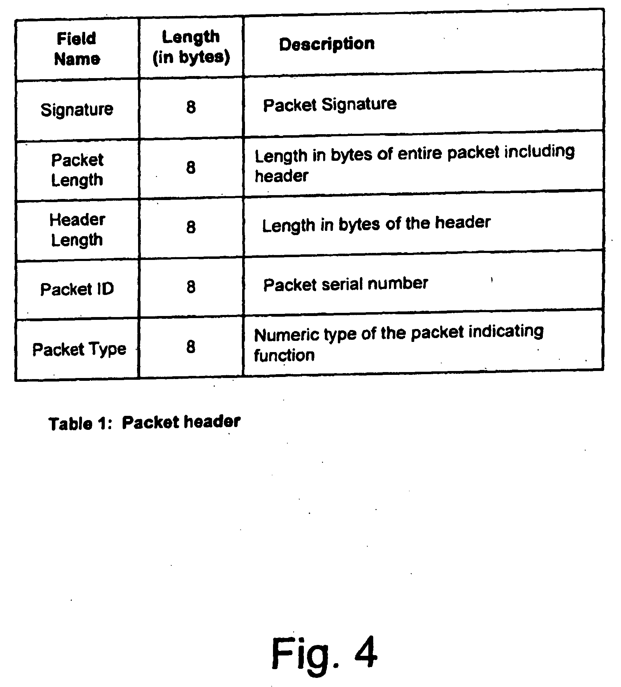

The table in **Figure 4** illustrates one embodiment of a packet header format. Other formats may also be used. While specific sizes and lengths are described other field names, lengths and/or descriptions may also be supported.

In one embodiment, packet data may be sent over the connection in either little-endian or big-endian format. In one embodiment, either device may send data in either format. The receiving device is responsible for swapping the data ordering, if necessary. In one embodiment, each packet must use a consistent endianness. In one embodiment, a predetermined (e.g., fixed) signature value (e.g., 0x4141504c36414643) may be used for all packet headers. The signature may allow the receiving device to determine the endianness of the data transmitted from the transmitting device. In one embodiment, the signature field is 8 bytes in length; however, other signature field sizes may also be supported.

The packet header may also include a field that indicates the length of the entire packet including the header. In one embodiment, the packet length field may be 8 bytes; however, other packet length field sizes may be supported, for example, to support different maximum packet sizes. The packet header may also include a field that indicates a packet serial number. The packet serial number may be utilized to order packets transmitted between host device 100 and client device 150. In one embodiment, the packet serial number field may be 8 bytes; however, other packet serial number field sizes may be supported.

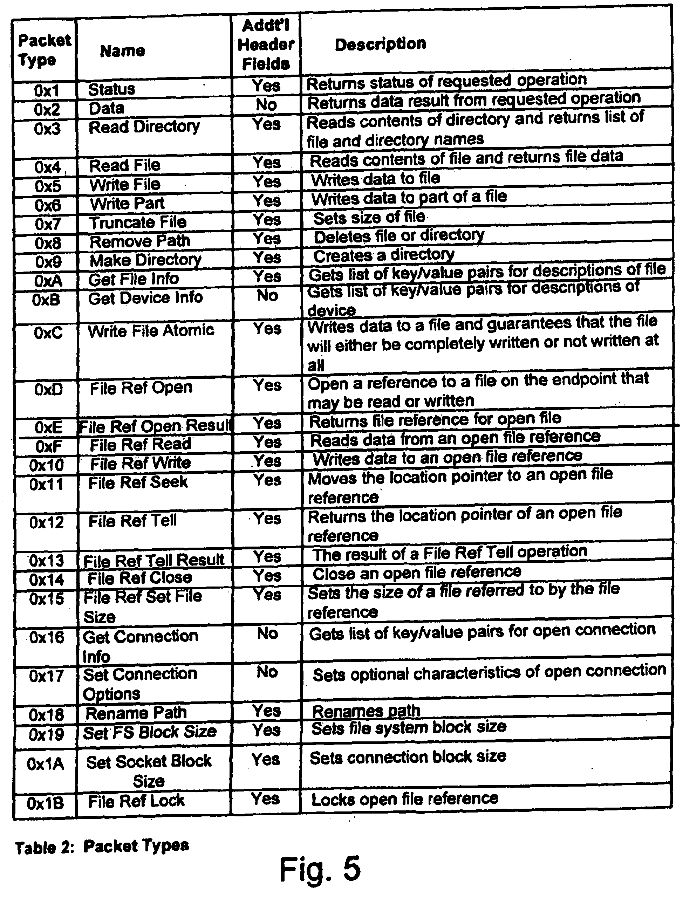

The packet header also includes a field for packet type. The packet type field includes a numerical indicator of the type of message in the packet, which indicates the function of the packet. One example listing of packet types and packet type values is provided in **Figure 5****.** Other packet labels, other packet functionality and/or other packet type values may also be supported. In one embodiment, the packet type field may be 8 bytes; however, other packet type field sizes may be supported.

The table in **Figure 5** illustrates one embodiment of a set of packets that may be utilized to communicate between endpoints. Other and/or different packets may also be used. While specific packet type identifiers and packet names are described other packet type identifiers, packet names and/or descriptions may also be supported.

Various embodiments of the packets listed in **Figure 5** are described in greater detail below. These packets descriptions provide examples of but one embodiment that may be provided. In one embodiment, each packet includes a standard packet header. This header may be formatted as illustrated in **Figure 4****.**

The Status packet may be utilized to provide status information in response to a request packet. The status packet may also be utilized to provide error information in the event of a failure or other error condition. In one embodiment, the status packet is formatted according to the following table.

**Table 3: Status Packet**

| **Field Name** | **Length In bytes** | **Description** |
|---|---|---|
| Header | 40 | Standard packet header (See, for example, Figure 2) |
| Status | 8 | Status code representing the status of the requested operation. |

The Data packet may be utilized to carry data between the host electronic device and the client electronic device. In one embodiment, the data packet may be of any size. That is, the data packet may be the length of the header plus the data to be transmitted. In an alternate embodiment, the data packet may be a fixed length such that if the data to be transmitted exceeds the payload capacity of the data packet, one or more additional data packets may be utilized. In one embodiment, the data packet is formatted according to the following table.

**Table 4: Data Packet**

| **Field Name** | **Length In bytes** | **Description** |
|---|---|---|
| Header | 40 | Standard packet header (See, for example, **Figure 2****)** |
| Data | Variable | Requested data/Data to be transmitted. |

The Read Directory packet may be utilized to read a directory on the target device. In one embodiment, the Read Directory packet is formatted according to the following table. The path string may be a path string in the appropriate format for the target device. For example, the path string may be a NULL-terminated Portable Operating System Interface for UNIX (POSIX) path string in UTF-8 format. Other formats may also be supported. The family of POSIX standards is formally designated as IEEE Std. 1003 and the international standard name is ISO/IEC 9945.

**Table 5: Read Directory Packet**

| **Field Name** | **Length In bytes** | **Description** |
|---|---|---|
| Header | 40 | Standard packet header (See, for example, **Figure 2****)** |
| Path | Variable | Path string in appropriate format. |

The Read File packet may be utilized to read a complete file on the target device. In one embodiment, the result is provided in a Status packet or a Data packet. In one embodiment, the Read File packet is formatted according to the following table.

**Table 6: Read File Packet**

| **Field Name** | **Length In bytes** | **Description** |
|---|---|---|
| Header | 40 | Standard packet header (See, for example, Figure 2) |
| Offset | 8 | Offset form start of file to requested data. |
| Length | 8 | Length of data to be read from file. |
| Path | Variable | Path string in appropriate format. |

The Write File packet may be utilized to write a complete file to the target device. In one embodiment, the Write File packet is formatted according to the following table.

**Table 7: Write File Packet**

| **Field Name** | **Length In bytes** | **Description** |
|---|---|---|
| Header | 40 | Standard packet header (See, for example, Figure 2) |
| Path | Variable | Path string in appropriate format. |
| ***Data*** | ***Variable*** | ***Data to be written to file.*** |

The Write Part packet may be utilized to write data to a portion of a file on the target device. The Write Part packet may be stateless in that when the data from the packet is written, state data associated with the data and/or the file is not maintained. In one embodiment, the Write Part packet is formatted according to the following table.

**Table 8: Write Part Packet**

| **Field Name** | **Length In bytes** | **Description** |
|---|---|---|
| Header | 40 | Standard packet header (See, for example, **Figure 2****)** |
| Offset | 8 | Offset from start of file start of write. |
| Path | Variable | Path string in appropriate format. |
| ***Data*** | ***Variable*** | ***Data to be written to file.*** |

The Truncate (Trunc) File packet may be utilized to set the length of a file. The length may be shorter than the corresponding data in which case some of the data is dropped, or the length may be greater than the corresponding data in which case the excess may be filled with a predetermined data pattern (e.g., all "0"). In one embodiment, the Trunc File packet is formatted according to the following table.

**Table 9: Trunc File Packet**

| **Field Name** | **Length In bytes** | **Description** |
|---|---|---|
| Header | 40 | Standard packet header (See, for example, **Figure 2****)** |
| Length | 8 | Length of file. |
| Path | Variable | Path string in appropriate format. |

The Remove Path packet may be utilized to delete a file or directory on the target device. In one embodiment, the Remove Path packet is formatted according to the following table.

**Table 10: Remove Path Packet**

| **Field Name** | **Length In bytes** | **Description** |
|---|---|---|
| Header | 40 | Standard packet header (See, for example, **Figure 2****)** |
| Path | Variable | Path string in appropriate format. |

The Make Directory packet may be utilized to create a directory on the target device. In one embodiment, the Remove Path packet is formatted according to the following table.

**Table 11: Make Directory Packet**

| **Field Name** | **Length In bytes** | **Description** |
|---|---|---|
| Header | 40 | Standard packet header (See, for example, **Figure 2****)** |
| Path | Variable | Path string in appropriate format. |

The Get File Info packet may be utilized to retrieve information describing a file on the target device. In one embodiment, the file information is provided as one or more key/value pairs transmitted in a Data packet. The information describing the file may be, for example, file size, last modification date, permissions. Additional and/or different file information may also be provided. In one embodiment, the Get File Info packet is formatted according to the following table.

**Table 12: Get File Info Packet**

| **Field Name** | **Length In bytes** | **Description** |
|---|---|---|
| Header | 40 | Standard packet header (See, for example, **Figure 2****)** |
| Path | Variable | Path string in appropriate format. |

The Get Device Info packet may be utilized to retrieve information describing the target device. In one embodiment, the device information is provided as one or more key/value pairs transmitted in a Data packet. The information describing the device may be, for example, device name, serial number, operating system version, battery level, free space available. Additional and/or different device information may also be provided. In one embodiment, the Get Device Info packet is formatted according to the following table.

**Table 13: Get Device Info Packet**

| **Field Name** | **Length In bytes** | **Description** |
|---|---|---|
| Header | 40 | Standard packet header (See, for example, **Figure 2****)** |

The Write File Atomic packet may be utilized to write a file on the target device. The Write File Atomic packet guarantees that the whole file is written or that none of the file is written. The Write File Atomic packet may be used, for example, to write a database file. In one embodiment, the Write File Atomic packet is formatted according to the following table.

**Table 14: Write File Atomic Packet**

| **Field Name** | **Length In bytes** | **Description** |
|---|---|---|
| Header | 40 | Standard packet header (See, for example, **Figure 2****)** |
| Path | Variable | Path string in appropriate format. |

The File Reference (Ref) Open packet may be utilized to obtain a token or other identifier to represent an open file on the target device. In one embodiment, the Write File Atomic packet is formatted according to the following table.

**Table 15: File Ref Open Packet**

| **Field Name** | **Length In bytes** | **Description** |
|---|---|---|
| Header | 40 | Standard packet header (See, for example, Figure 2) |
| Mode | 8 | Mode to use when opening file (See Table 16). |
| Path | Variable | Path string in appropriate format. |

In one embodiment, the Mode field includes a numeric indicator of a mode to use when opening the file. The Mode Name and Mode Value designations in Table 16 are examples for one embodiment. A different group of modes may be supported. Also, different mode values may be supported.

**Table 16: Modes**

| **Mode Name** | **Mode Value** |
|---|---|
| Read Only | 1 |
| Read-Write | 2 |
| Write-Truncate | 3 |
| Read-Write-Truncate | 4 |
| Write-Append | 5 |
| Read-Write-Append | 6 |

In Read Only mode, the file may be opened for reading only. In Read-Write mode, the file may be opened for reading and writing only. In Write-Truncate mode, the file may be opened for writing or truncation. In Read-Write-Truncate mode, the file may be opened for reading, writing or truncation. In Write-Append mode, the file may be opened for writing or appending. In Read-Write-Append mode, the file may be opened for reading, writing or appending.

The File Ref Open Result packet may be utilized to return a file reference token that may be used in one or more of the packets described herein when accessing a file on the target device. In one embodiment, the File Ref Open Result packet is formatted according to the following table.

**Table 17: File Ref Open Result Packet**

| **Field Name** | **Length In bytes** | **Description** |
|---|---|---|
| Header | 40 | Standard packet header (See, for example, Figure 2) |
| File Ref | 8 | File Reference resulting from the File Ref Open operation |

The File Ref Read packet may be utilized to read a file using the file reference resulting from the File Ref Open operation. In one embodiment, the position within the file is automatically advanced in response to a File Ref Read operation. In one embodiment, the File Ref Read packet is formatted according to the following table.

**Table 18: File Ref Read Packet**

| **Field Name** | **Length In bytes** | **Description** |
|---|---|---|
| Header | 40 | Standard packet header (See, for example, **Figure 2****)** |
| File Ref | 8 | File Reference resulting from the File Ref Open operation |
| Length | 8 | Length of data to read from file. |

The File Ref Write packet may be utilized to write to a file using the file reference resulting form the File Ref Open operation. In one embodiment, the position within the file is automatically advanced in response to a File Ref Write operation. In one embodiment, the File Ref Write packet is formatted according to the following table.

**Table 19: File Ref Write Packet**

| **Field Name** | **Length In bytes** | **Description** |
|---|---|---|
| Header | 40 | Standard packet header (See, for example, **Figure 2****)** |
| File Ref | 8 | File Reference resulting from the File Ref Open operation |
| Data | Variable | Data to be written to file |

The File Ref Seek packet may be utilized to determine a location within a file using the file reference resulting from the File Ref Open operation. In one embodiment, the File Ref Seek packet is formatted according to the following table.

**Table 20: File Ref Seek Packet**

| **Field Name** | **Length In bytes** | **Description** |
|---|---|---|
| Header | 40 | Standard packet header (See, for example, Figure 2) |
| File Ref | 8 | File Reference resulting from the File Ref Open operation |
| Whence | 8 | Location to seek from. (See Table 21) |
| Offset | 8 | Offset from start of file to begin reading. |

In one embodiment, values in the Whence field may be used to indicate how the seek is to be performed. Table 21 provides an example of Whence values that may be used in a File Ref Seek packet.

**Table 21: Whence Values for use in File Ref Seek packet**

| **Whence Value** | **Description** |
|---|---|
| 0 | Seek to the absolute position specified by the Offset field. |
| 1 | Seek from the current position of the file. |
| 2 | Seek from the end of the file. |

The File Ref Tell packet may be utilized to determine a location within a file using the file reference resulting from the File Ref Open operation. In one embodiment, the File Ref Tell packet is formatted according to the following table.

**Table 22: File Ref Tell Packet**

| **Field Name** | **Length In bytes** | **Description** |
|---|---|---|
| Header | 40 | Standard packet header (See, for example, **Figure 2****)** |
| File Ref | 8 | File Reference whose position will be returned. |

The File Ref Tell Result packet may be utilized to return the result of a File Ref Tell operation. In one embodiment, the File Ref Tell Result packet is formatted according to the following table.

**Table 23: File Ref Tell Result Packet**

| **Field Name** | **Length In bytes** | **Description** |
|---|---|---|
| Header | 40 | Standard packet header (See, for example, **Figure 2****)** |
| Offset | 8 | The current position offset of the requested file reference. |

The File Ref Close packet may be utilized to close a file using the file reference resulting from the File Ref Open operation. In one embodiment, the File Ref Close packet is formatted according to the following table.

**Table 24: File Ref Close Packet**

| **Field Name** | **Length In bytes** | **Description** |
|---|---|---|
| Header | 40 | Standard packet header (See, for example, **Figure 2****)** |
| File Ref | 8 | The File Ref of the file to be closed. |

The File Ref Set Size packet may be utilized to set the size of a file corresponding to the reference resulting from the File Ref Open operation. In one embodiment, the File Ref Set Size packet is formatted according to the following table.

**Table 25: File Ref Set Size Packet**

| **Field Name** | **Length In bytes** | **Description** |
|---|---|---|
| Header | 40 | Standard packet header (See, for example, **Figure 2****)** |
| File Ref | 8 | The File Ref of the file to be closed. |
| File Size | 8 | The new size of the file in bytes. |

The File Ref Set Size packet may be utilized to set the length of a file. The length may be shorter than the corresponding data in which case some of the data is dropped, or the length may be greater than the corresponding data in which case the excess may be filled with a predetermined data pattern (e.g., all "0").

The Rename Path packet may be utilized to rename a directory path on the target device. In one embodiment, the Rename Path packet is formatted according to the following table.

**Table 26: Rename Path Packet**

| **Field Name** | **Length In bytes** | **Description** |
|---|---|---|
| Header | 40 | Standard packet header (See, for example, **Figure 2****)** |
| Source Path | Variable | Path string in appropriate format for the path to be renamed. |
| Destination Path | Variable | Path string in appropriate format for the new path name. |

The path string may be a path string in the appropriate format for the target device. For example, the source and destination path strings may be a NULL-terminated POSIX path strings in UTF-8 format. Other formats may also be supported. In one embodiment, the destination path field immediately follows the source path field in the Rename Path packet.

The Set FS Block Size packet may be utilized to set a block size for the file system on the target device. In one embodiment, the Set FS Block Size packet is formatted according to the following table.

**Table 27: Set File System Block Size Packet**

| **Field Name** | **Length In bytes** | **Description** |
|---|---|---|
| Header | 40 | Standard packet header (See, for example, **Figure 2****)** |
| Block Size | 8 | Block size for file system operations |

The block size may be utilized on by the client device file system. For example, with a block size of 64 kb, when writing file data to the client device, 64 kb of data would be written at a time even if the host device sends data in larger or smaller blocks. In one embodiment, the client device does not guarantee that data is written according to block size, but may be utilized for performance.

The Set Socket Block Size packet may be utilized to set a block size for the data connection between the target device and the host device. In one embodiment, the Set Socket Block Size packet is formatted according to the following table.

**Table 28: Set Socket Block Size Packet**

| **Field Name** | **Length In bytes** | **Description** |
|---|---|---|
| Header | 40 | Standard packet header (See, for example, **Figure 2****)** |
| Block Size | 8 | Block size for communication between target and host |

The block size may be utilized by the client system to read and write data via the connection between the host device and the client device. For example, with a block size of 64 kb, when reading data from the connection, the client device may attempt to read data as 64 kb blocks. In one embodiment, the client device does not guarantee that data is processed according to block size, but may be utilized for performance.

The File Ref Lock packet may be utilized to lock an open file reference identifier against use by a second application. In one embodiment, the File Ref Lock packet is formatted according to the following table.

**Table 29: File Ref Lock Packet**

| **Field Name** | **Length In bytes** | **Description** |
|---|---|---|
| Header | 40 | Standard packet header (See, for example, **Figure 2****)** |
| File Ref | 8 | The File Ref of the file to be locked. |
| Lock type | 8 | Type of lock to be applied to the file reference identifier |

The access to a file reference may be blocked so that only one application may have access to the opened file at a given time. In one embodiment, a shared lock, an exclusive lock and a non-blocking lock are supported. In alternate embodiments, additional and/or different locks are supported. In one embodiment, the lock is advisory only and an application must query the file to determine whether the file is locked or not. In one embodiment, multiple applications/processes may obtain a shared lock.

The messages and formats described above may be utilized to support a full file communication protocol. In the examples that follow a subset of the packets are used to illustrate uses of the protocol. Many other operations may also be supported.

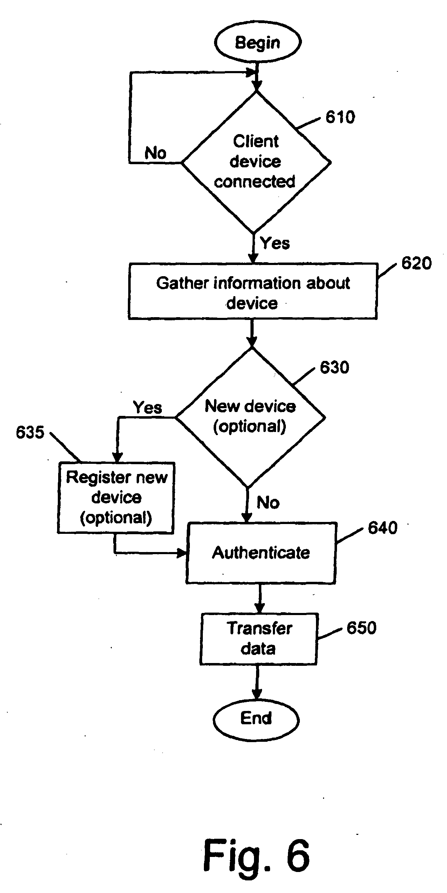

**Figure 6** is a flow diagram of one embodiment of a technique to transfer data to a client device. In the example of **Figure 6****,** the host device may determine whether a client device has been connected to the host device, 610. As discussed above, the connection between the host device and the client device may be either wired or wireless.

The host device may detect the presence of the client device utilizing any suitable technique. For example, if the client device is connected with the host device via a wired connection, the host device may be configured to detect the physical connection of the client device to the wired interface. If the client device is connected with the host device via a wireless connection, the host device may be configured to respond to the completion of a pairing or other type of wireless connection procedure.

In one embodiment, if no client device is connected, 610, the host device may wait for a client device to be connected. In another embodiment, the host device may respond only if a request is received via the interface. For example, the wired interface may include a button to be pressed by a user to initiate communication between the client device and the host device. As another example, the client device may have a user interface that allows the user to request communications with the host device.

In response to connection of the client device, 610, the host device may gather information about the client device 620. Gathering of information about the client device may be accomplished by sending one or more of the packets discussed above. For example, the host device may send a Get Device Info packet and/or a Read Directory packet. The client device may respond to the packet(s) by providing the requested information to the host device.

Upon gathering sufficient information from the client device, the host device may determine whether the client device is a new device, 630. That is, the host device may determine whether the client device has ever been connected to the host device before. If the client device is a new device, the host device may perform a registration procedure, 635. The registration procedure can allow the host device to retain information about the client device that may be used, for example, for authentication, to expedite connections and/or for backup purposes.

The host device may authenticate the client device, 640. Authentication may be accomplished by, for example, exchange of keys or other identifiers between the host device and the client device. Other authentication techniques may also be used. In one embodiment, authentication is performed with corresponding sync services resident on the host device and the client device.

After authentication the host device may transfer data to the client device, 650, using the packets described herein. For example, to add a new file to the client device (e.g., load a new media file on the client device), the host device may use a Write File packet to cause the data to be written to a file on the client device. Any number of data transfer packets may be used in a single session.

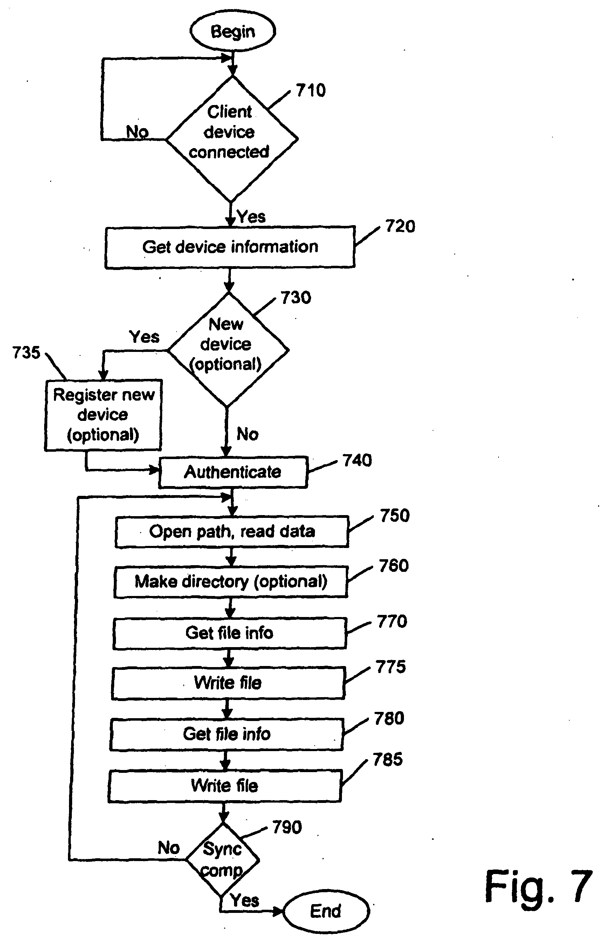

**Figure 7** is a flow diagram of one embodiment of a technique to synchronize data between a host device and a client device. The example of **Figure 7** utilizes only a subset of the packet types discussed above. However, the example of **Figure 7** is representative of a session that may occur between a host device and a client device utilizing the protocols and messages set forth herein.

In the example that follows, "->" indicates that the corresponding packet is transmitted from the host device to the client device and "<-" indicates that the corresponding packet is transmitted from the client device to the host device. The packet type is listed first and one or more fields in the packet are listed with example values with "<...>" indicating that additional fields are not shown in the example of **Figure 7****.** The data section of a packet, if any, is indicated by "Data=..." A listing of packets is set forth first with an explanation of the session provided after the listing of packets.

```
              -> Get Device Info
              <- Data <Model=ABC123, Filesystem Size=1234, <...>>
                    Perform Optional Registration and/or Authentication
              -> File Ref Open <Path='/DeviceData.xml', Mode=Read>
              <- File Ref Open Result <FileRef=408>
              -> File Ref Read <FileRef=408, Length=8192>
              <- Data <Data=<...>>
              -> File Ref Close <FileRef=408>
              <- Status <Status=SUCCESS>
              -> Make Directory <Path='/media'>
              <- Status <Status=PATH_EXISTS>
              -> Get File Info <Path='/media/file1.mp3'>
              <- Data <Data=<...>>
              -> File Ref Open <Path='/media/file1.mp3',
              mode=WriteTrucate>
              <- File Ref Open Result <FileRef=831>
              -> File Ref Write <FileRef=831, Data=<...>>
              <- Status <Status=SUCCESS>
              -> File Ref Write <FileRef=831, Data=<...>>
             <- Status <Status=SUCCESS>
              -> File Ref Close <FileRef831>
              <- Status <Status=SUCCESS>
              -> Get File Info <Path='/media/file2.mp3'>
              <- Status <Status=PATH_DOES_NOT_EXIST>
              -> File Ref Open <Path='/media/file2.mp3',
              mode=WriteTrucate>
              <- File Ref Open Result <FileRef=831>
              -> File Ref Write <FileRef=831, Data=<...>>
              <- Status <Status=SUCCESS>
              -> File Ref Write <FileRef=831, Data=<...>>
              <- Status <Status=SUCCESS>
              -> File Ref Close <FileRef831>
              <- Status <Status=SUCCESS>
```

In the example of **Figure 7****,** the host device may determine whether a client device has been connected to the host device, 710. As discussed above, the connection between the host device and the client device may be either wired or wireless.

The host device may detect the presence of the client device utilizing any suitable technique. For example, if the client device is connected with the host device via a wired connection, the host device may be configured to detect the physical connection of the client device to the wired interface. If the client device is connected with the host device via a wireless connection, the host device may be configured to respond to the completion of a pairing or other type of wireless connection procedure.

In one embodiment, if no client device is connected, 710, the host device may wait for a client device to be connected. In another embodiment, the host device may respond only if a request is received via the interface. For example, the wired interface may include a button to be pressed by a user to initiate communication between the client device and the host device. As another example, the client device may have a user interface that allows the user to request communications with the host device.

In response to connection of the client device, 710, the host device may gather information about the client device 720. Gathering of information about the client device may be accomplished by transmitting the Get Device Info packet from the host device to the client device and transmitting the Data packet from the client device to the host device. As discussed above, any type of information about the client device may be acquired by the host device in this manner. In the example of **Figure 7****,** the client device provides at least a model identifier and a file system size to the host device. Additional and/or different data may also be provided.

Optionally, upon gathering sufficient information from the client device, the host device may determine whether the client device is a new device, 730. If the client device is a new device, the host device may perform an optional registration procedure, 735. The host device may authenticate the client device, 740. Authentication may be accomplished by, for example, exchange of keys or other identifiers between the host device and the client device. Other authentication techniques may also be used. In one embodiment, authentication is performed with corresponding sync services resident on the host device and the client device.

After authentication, the host device may begin synchronization of data between the host device and the client device. The client device may request a File Ref value corresponding to a path on the client device and read data in the path, 750. This may be accomplished by using, for example, the File Ref Open, File Ref Open Result, File Ref Read, Data packets listed above. If the requested directory does not exist, the directory may be created, 750. When the requested data has been acquired, the File Ref may be closed. This may be accomplished by using the File Ref Close and Status packets listed above.

A Make Directory packet may be utilized to determine whether a target path exists. For example, using the packets listed above, a Make Directory packet with the target of '/media' may be used to determine whether the 'media' directory exists. If the 'media' directory does exist, that Status packet from the client device may indicate the presence of the 'media' directory with a 'PATH_EXISTS' status.

File information may be requested for a first file to be updated (e.g., '/media/file1.mp3'). The Get-File Info packet may be used to request information related to the first file to be updated, 770. The client device may use a Data packet to return data related to the first file to be updated.

The host device may then request a File Ref value to use while updating the first file. This may be accomplished using the File Ref Open packet with a response from the client device in a File Ref Open Result packet. The Host device may use the File Ref value to write data to the file on the client device, 775. This may be accomplished using the File Ref Write packet with confirmations from the client device carried by Status packets. When writing to the file is complete, the host device may use a File Ref Close packet to release the File Ref, which can be confirmed by a Status packet from the client device.

A Make Directory packet may be utilized to determine whether a target path for a second file to be updated exists. For example, using the packets listed above, a Get File Info packet with the target of '/media/file2.mp3' may be used to determine whether the 'file2.mp3' file exists and get information related to the file, 780. If, for example, the 'file2.mp3' file does not exist, the Status packet from the client device may return a 'PATH_DOES_NOT_EXIST' status.

The host device may then request a File Ref value to use while updating the second file. This may be accomplished using the File Ref Open packet with a response from the client device in a File Ref Open Result packet. The Host device may use the File Ref value to write data to the file on the client device, 785. This may be accomplished using the File Ref Write packet with confirmations from the client device carried by Status packets. When writing to the file is complete, the host device may use a File Ref Close packet to release the File Ref, which can be confirmed by a Status packet from the client device.

Any number of files may be updated in a similar manner. If the synchronization is not complete, 790, additional files may be updated as described above. If the synchronization is complete, 790, the synchronization session may be terminated.

Another aspect of this disclosure relates to multiplexed data stream protocols. The use of such a protocol allows for multiple applications (or the same application) on a device being able to maintain an arbitrary number of multiple concurrent sessions with one or more applications on the other device and the number of concurrent sessions can change over time as applications dynamically cause the creation of sessions or the closure of their sessions. Such a protocol may be implemented in a manner so that it is independent of the transport of the interfaces (e.g. USB interfaces or BLUETOOTH interfaces) used on both a device and another device (e.g., a host) and multiple independent connections can be maintained over the same, common link/interface (e.g., the USB interface). In one embodiment, a single USB session is established and an arbitrary and changeable number of multiple concurrent sessions are tunneled over that single USB session. In one embodiment, the particular interface, such as USB, should either support framing or some framing protocol should be added, such as COBS (constant overhead byte stuffing) or a PPP/SLIP style of framing. The multiple independent connections can be used concurrently for different purposes (e.g., files, such as media files, can be transferred while structured data, such as contacts in an Address Book, can be exchanged and/or synchronized between the devices while other data (e.g., emails or set-up information or software widgets) is also being exchanged between devices). The ability to support multiple independent connections is particularly useful for devices which have a multi-tasking operating system (OS), which allows multiple applications to run concurrently, although such an OS is not necessary.

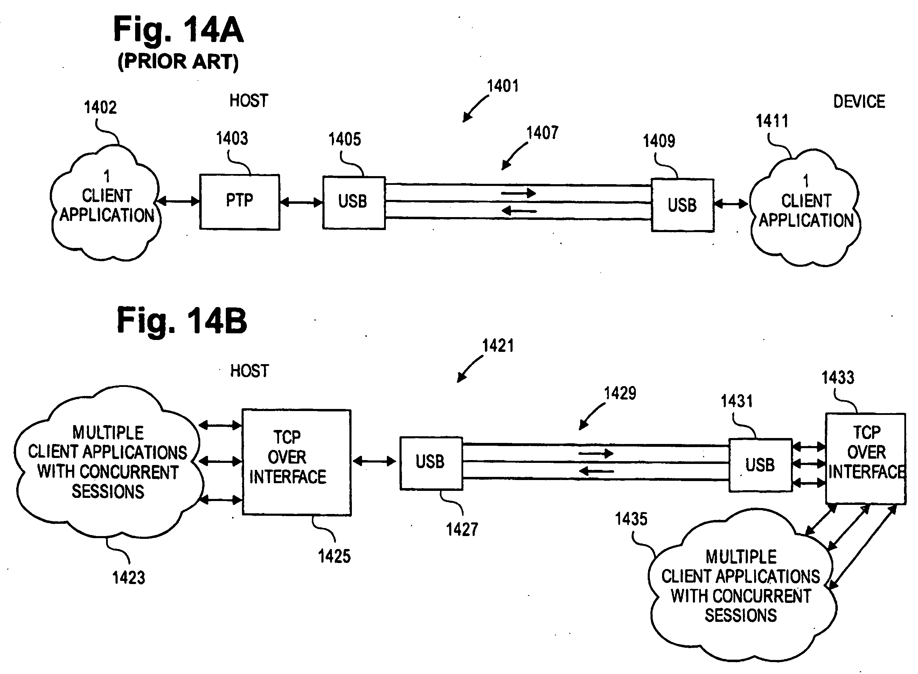

Figure **14B** shows how, using an embodiment of the present invention, an arbitrary number of multiple "client" applications (e.g., synchronization software for synchronizing structured data, file transfer software for transferring files, backup software, etc.) can maintain multiple concurrent connections or sessions over a non-network interface such as USB (wired or wireless) or BLUETOOTH. Figure 14A shows that, in the prior art, there is effectively only one client application (or a static, fixed number) on each device which is able to use the USB connection between the devices. In the interconnected system 1401 of Figure 14A, the client application 1402 on the host uses a PTP (picture transfer protocol) protocol 1403 to send and receive data through its USB interface 1405 and the connection 1407, and the client application 1411 on the device uses a PTP protocol (not shown) to send and receive data through the device's USB interface 1409. The connection 1407 and the USB interfaces 1405 and 1409 support only a single connection or session. In contrast, the interconnected system 1421 supports multiple independent and concurrent connections or sessions through the connection 1429 and the USB interfaces 1427 and 1431. Multiple client applications 1423 on the host can maintain the independent and concurrent connections or sessions with their respective counterpart in the multiple client applications 1435. For example, in the case of the system shown in Fig. 8, a file transfer software 807 on a device 801 may have an opened and maintained connection with media software 831 (e.g., iTunes) on the host 803 (or with file transfer software 833) while synchronization software 805 on the device 801 maintains an opened connection (which is independent of the connection between software 807 and 831) with sync software 835 on the host. The multiple independent and concurrent connections may be implemented through the use of a TCP-like protocol, on both the host and the device, in which TCP-like packets, having TCP-like headers, are transmitted through the non-network interfaces, such as the USB interfaces 1427 and 1431. The TCP-like packets are processed by the TCP over interface 1425 software on the host and the TCP over interface 1431 software on the device. The TCP over interface 1425 software may be the same as, or similar to, the TCP over interface software 821 in Figure 8, and the TCP over interface 1431 software may be the same as, or similar to, the TCP over interface software 841 in Figure 8. The TCP-like packets specify, in the TCP-like headers, the respective source and destination ports which are associated with corresponding source (e.g., sending) and destination (e.g., receiving) applications which have the established connection, and the specifying of these ports allow independent and concurrent connections to be maintained. Methods described herein also provide a mechanism to gracefully recover if the connection is abruptly or unpredictable disconnected (such as when a user unplugs the devices from its USB cable or cradle in order to answer a phone call received by the wireless cellular telephone, thereby disconnecting the device from the host). The TCP-like protocol provides a notification, when a session has been severed, to the source and destination applications, and this notification can be used by the applications to handle the notification and clean up their states and implement any desired corrections to data. The TCP-like protocol can allow the source and destination applications to quickly and gracefully recover from a disconnected communication by disregarding a failed connection session in whole or in part (e.g., by deleting a partially received file or partially received set of structured data and setting an error message or status message which will cause the two devices, when re-connected, to establish a new connection between those source and destination applications in order to exchange the data which was attempted to be exchanged in the prior failed connection session).

The TCP-like protocol may also be used with a file transfer protocol, running on top of the TCP-like protocol, and the file transfer protocol may be used to provide file transfers between the two devices, and a file transferred in packets (e.g., the TCP-like packets) can be reconstructed on the receiving side and can be validated after all the data (received in multiple TCP-like packets) has been received (or it may be validating in part as portions of the file are received). The file may be validated using conventional checksum operations or hash operations. Many different types of software may be used with this TCP-like protocol, such as any protocol that works with a bi-directional stream of bytes may be layered on top of this TCP-like protocol. These different types of software may include telnet (e.g. for interactive telnet sessions), rsync, gdb over IP for remotely debugging applications on another device, etc. Further, the software running on top of this TCP-like protocol may implement a transaction-type protocol, including the use of atomic transactions. This TCP-like protocol allows the one or more layers of software running on top of this TCP-like protocol to provide their services and functionality without requiring that they be responsible for establishing and maintaining a connection with another software running on another system.

It will be understood that the terms "device" and "host" are used interchangeably; in other words, "device" applies to both a device and a host. A host is a device and a device may be considered a host. However, in certain embodiments, a session may only be initiated by a host, from the host to a device, and in that case the host is not interchangeable with the device. It will also be understood that the TCP-like protocol described herein is an example of a communications protocol which provides a reliable transport mechanism which supports flow control and multiplexing of independent connections and that other protocols, which provide a similar mechanism, may alternatively be used in a least certain embodiments of the invention. It will also be appreciated that hardware, such as TCP hardware accelerators, may be used to wholly or partially replace the software described herein in at least certain embodiments of the invention.

Figure 8 shows an example of an interconnected device 801 and host 803, which are connected through interface 823 (on the device) and interface 847 (on the host). These interfaces may be considered non-network interfaces such as USB or BLUETOOTH interfaces. In other words, interfaces used for peripherals (e.g., mice, keyboards, storage devices) but not for connection to a computer network, such as a LAN (local area network) or the Internet, are used to connect the host 803 and device 801. Device 801 includes an interface 817 which is designed to connect to a computer network, and host 803 includes an interface 845 (such as a WiFi or Ethernet or telephone modem) which is also used to connect to a network, such as the Internet. The interface 817 is coupled to transmit/receive TCP/IP packets processed by the TCP/IP software stack 815; the interface 817 and TCP/IP software stack 815 provide a conventional Internet or network connection for device 801. The interface 845 is coupled to transmit/receive TCP/IP packets processed by the TCP/IP software stack 843; the interface 845 and the TCP/IP software stack 843 provide a conventional Internet or network connection for host 803.

The host 803 includes several client applications 831, 833, 835 and 837 which may exchange data and/or files, through the interfaces 823 and 847, with client applications 805, 807, and 809 on device 801. **Figure 8** shows examples of certain client applications on both the host 803 and the device 801, and there may be more or fewer or different client applications on one or both of the device and the host. In the example shown in **Figure 8****,** the client applications on the host 803 communicate with the TCP over interface software 841 and the TCP/IP software stack 843 through a socket API 839 which provides intercommunication between software modules. The socket API 839 provides, in response to calls to the socket API, an opened socket for each endpoint of a session for stream based protocols. The socket API 819 provides similar functionality on the device 801 allowing opened sockets to be created to establish and maintain communication between the TCP/IP software stack 815 and the TCP over interface software 821 and to allow the client applications 805, 807 and 809 to establish and maintain communication (through an optional gatekeeper 811) with the TCP/IP software stack. Typically, each client application on one side is configured to maintain a connection with a corresponding counterpart on the other side. For example sync software 835 is configured to maintain a connection with synchronization software 805 in order to exchange data (e.g., structured data or widgets, etc.,) between the devices. media player such as iTunes) is configured to maintain a connection with file transfer software 807 (which may be a media player, such as iTunes, on the device). The file transfer software may, in certain embodiments, also be configured to maintain a connection with file transfer software 833. The file sharing software 809 is configured to maintain a connection with the file sharing software 837. These connections may be maintained through one or more optional gatekeepers, such as gatekeeper 811 and a corresponding gatekeeper on the host (not shown) which may be between the client applications 831, 833, 835, 837 and the TCP over interface software 841. The gatekeepers serve to, in at least certain embodiments, create an authenticated connection between the device and the host if such connection is desired. The gatekeepers in **Figure 8** may be the same as, or similar to, gatekeeper client 115 and gatekeeper 180 shown in **Figure 1****.** The connections for certain applications (e.g. file sharing or telnet or gdb over IP) may bypass the gatekeeper on the device completely.

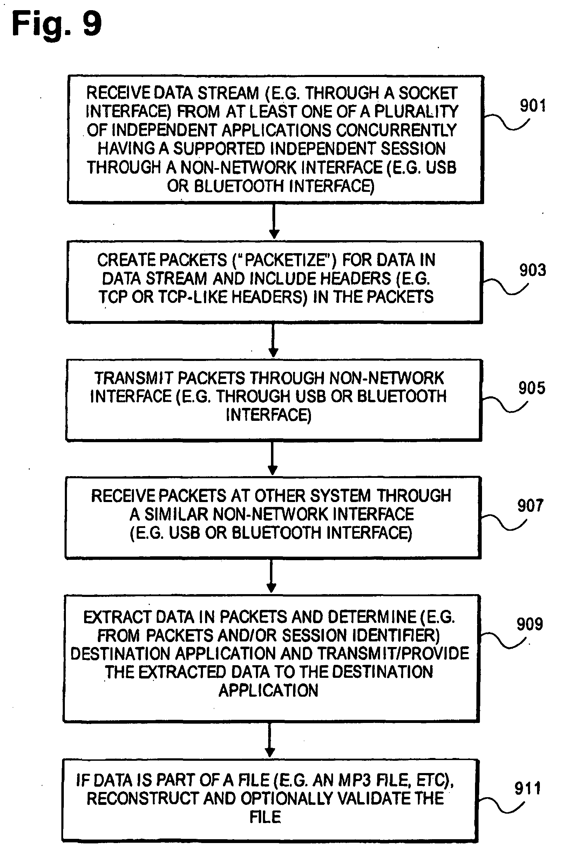

The operation of TCP/IP software stack 815, and TCP over interface software 821, and TCP over interface software 841 are described further below in conjunction with the description of **Figures 9-12****.** These software components provide for the multiplexed data stream protocol described herein.

The device 801 includes data 813 which may be stored in any one of a plurality of storage media, including flash memory, hard drives, volatile semiconductor memory, etc. This data may include the structured data for address books, calendar, to do items, and notes, which data may be synchronized through the synchronization software 805 and the synchronization software 835 as described herein. Further, the data 813 may also include media files, such as MP3 files for music or MPEG 4 files for movies or other audio visual media. The data 813 may also include other types of data (e.g., word processing files, etc.) or even executable programs, such as widgets, data relating to set up information and email or phone account information, etc. It will be appreciated that the various client applications on the device side communicate with the storage device containing the data 813 in order to access the data. For example, the file transfer software 807 may read or write the data 813 in order to transfer files. It will be understood that the host device 803 also includes a data storage medium, such as a flash memory or a hard drive or a volatile memory device (e.g. DRAM), or other storage media for storing the data used by the client applications on the host device 803.

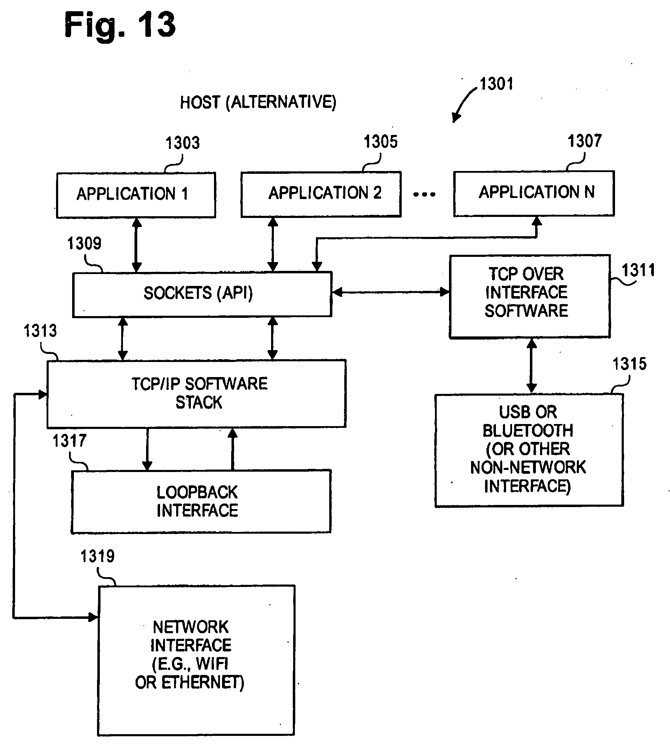

**Figure 8** shows one example of a host device 803, while **Figure** 13 shows an alternative software architecture for a host device. The host device 1301 includes several client applications, including applications 1303, 1305, and 1307, each of which may be coupled through a sockets API 1309 to the TCP/IP software stack 1313 and the TCP over interface software 1311. The TCP/IP software stack 1313 may also be coupled through the sockets API 1309 to the TCP over interface software 1311 in order to send and receive packets through the USB or BLUETOOTH interface 1315. A loop back interface 1317 is coupled to the TCP/IP software stack 1313 in order to provide a path for packets between the TCP/IP software stack 1313 and the TCP over interface software 1311. The TCP over interface software 1311 is coupled to the interface 1315, which is similar to the interface 847 of **Figure 8****.** The TCP/IP software stack 1313 is coupled to the interface 1319 which is similar to the interface 817 shown in **Figure 8****.** The primary difference between the host shown in **Figure 13** and the host shown in **Figure 8** is that the TCP-like packets received and transmitted through interface 847 are processed by the TCP over interface software 841 and not by the TCP/IP software stack 843; on the other hand, in the case of the host device shown in **Figure 13****,** the TCP-like packets transmitted and received through interface 1315 are processed by both the TCP over interface software 1311 and the TCP/IP software stack 1313.

**Figure 9** is a flow chart which shows an example of a method according to one embodiment of the invention for exchanging data between two systems, such as a host and a device. This method begins on one side and ends on the other side after a completed exchange of data between the two devices. In operation 901, a data stream is received from at least one of a plurality of independent applications concurrently having a supported independent session through a non-network interface, such as a USB or BLUETOOTH interface. This data stream may be received through a socket interface. For example, a media file controlled by the media software 831 may send the media file, through a socket interface to the TCP over interface software 841. In operation 903, packets are created for the data in a data stream, and these packets include headers, such as TCP-like headers in the packets. For example, the TCP over interface software 841 may create packets out of the data stream, and each of these packets includes a TCP-like header in each packet. These packets are transmitted in operation 905 through the non-network interface, such as the interface 847. In turn, these packets are received at the other system through a similar non-network interface, such as the interface 823. Then in operation 909, the data in the packet is extracted by, for example, the TCP over interface software 821. The destination of the data may be determined from the port identifiers within the packets, which allows the data to be transmitted or provided to the destination application on the receiving device. If the data is part of a file, such as an MP3 file or movie file, etc., the file is reconstructed in operation 911 and optionally validated. The validation may involve the use of a check sum for the whole file or a hash operation as is known in the art. If at any point in time during the connection, the user or the system causes a disconnection to occur (e.g., the USB cable is unplugged from the device), then both sides clean up their states and close of their sockets, terminating the TCP-like connection between the two devices. This notifies the client on the host and the service on the device that the sessions are gone. Also, the service on the device or client on the host can at any time close the session and the other side will be notified that the session was closed.

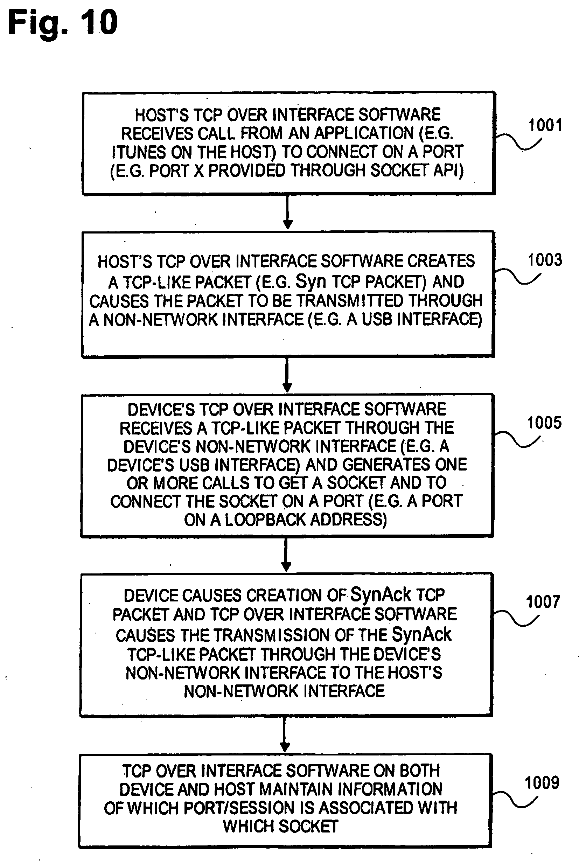

**Figure 10** provides an example of an initialization or set up method according to one embodiment of the invention. In operation 1001, a host's TCP over interface software receives a call from an application, such as iTunes on the host, to connect on a port, such as port "X" provided through a socket API. In response to this call, the host's TCP over interface software, in operation 1003, creates a TCP-like packet, such as a SYN TCP packet, and causes the packet to be transmitted through a non-network interface, such as a USB interface or the interface 847 shown in **Figure 8****.** The device's TCP over interface software receives the TCP-like packet through the device's non-network interface (e.g., the interface 823, which may be a USB interface) and generates one or more calls to get a socket and to connect the socket on a port, such as a port on a loopback address associated with the TCP/IP software stack 815. The device, in operation 1007 causes the creation of a synack TCP packet and the TCP over interface software causes the transmission of the synack TCP-like packet through the device's non-network interface to the host's non-network interface. As shown in operation 1009, the TCP over interface software on both the device and the host may maintain information of which port/session is associated with which socket.

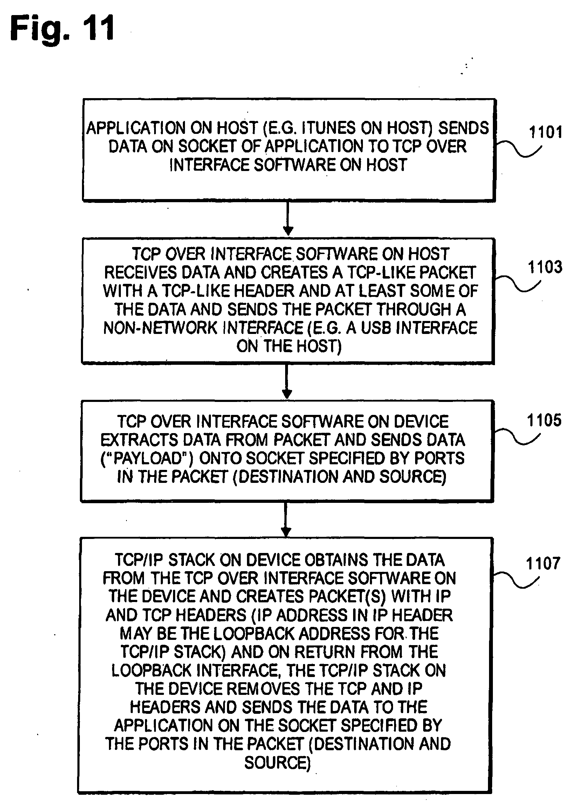

**Figure 11** shows one example of a method for transferring data from a host to a device. In operation 1101, an application on the host, such as iTunes on the host, sends data on a socket of the application to a TCP over interface software on the host. For example, in the case of the host 803, the media software 831 sends data, through a socket opened for the application to the TCP over interface software 841. In operation 1103, the TCP over interface software on the host receives the data and creates a TCP-like packet with a TCP-like header and at least some of the data within the packet and sends the packet through a non-network interface, such as a USB interface or the interface 847 shown in **Figure 8****.** In operation 1105, the TCP over interface software on the device extracts the data from the packet and sends the data (sometimes referred to as "payload") onto a socket specified by the ports in the packet. In the example of **Figure 8****,** the TCP over interface software 821 extracts the data received through the interface 823 and sends this data on to a socket, which will cause the data to be provided to the TCP/IP software stack 815. In operation 1107, the TCP/IP stack on the device, such as the TCP/IP software stack 815 obtains the data from the TCP over interface software on the device and creates packets with IP and TCP headers. The IP address in this case may be the loopback address for the TCP/IP stack. For example, the TCP/IP software stack 815 may include a loopback interface (not shown) such as the loopback interface shown in **Figure 13****.** The packets will return from the loopback interface and the TCP/IP stack in operation 1107 removes the TCP and IP headers and sends the data to the application on the sockets. In the example shown in **Figure 11** where the application is the iTunes application on the host, the receiving application on the device may be the file transfer software 807 which may be a portion of a media player on a device.

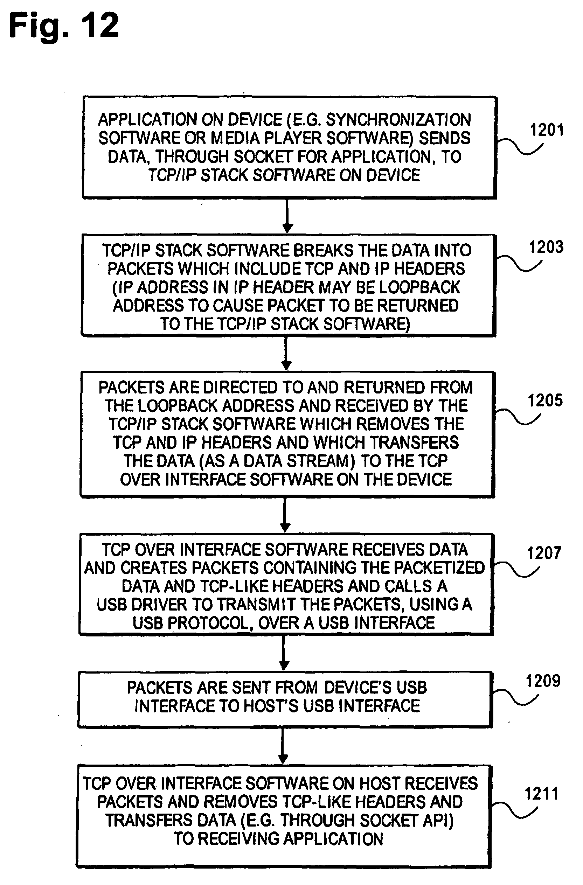

**Figure 12** shows an example of a method for transferring data from a device to a host. In operation 1201, an application on the device, such as a synchronization software 805 or a media player software sends data, through a socket for the application to the TCP/IP stack software or device, such as the TCP/software stack 815. In operation 1203, the TCP/IP stack software breaks a data into packets and includes TCP and IP headers with the data in order to create the packets. The IP address in the IP header may be a loopback address to cause the packet to be returned to the TCP/IP software stack, such as the software stack 815. In operation 1205, the packets are directed to and returned from the loopback address and received by the TCP/IP software stack which removes the TCP and IP headers and which transfers the data, as a data stream, to the TCP over interface software, such as the TCP over interface software 821 on the device. In operation 1207, the TCP over interface software receives the data from the TCP/IP software stack 815 and creates packets containing the packetized data and TCP-like headers and calls a USB driver to transmit the packet, using a USB protocol over the USB interface, such as the interface 823. In operation 1209 these packets are sent from a device's USB interface to the host's USB interface, such as the interface 847 on the host. Then, in operation 1211, the TCP over interface software on the host, such as the TCP over interface software 841 receives the packets and removes the TCP-like headers and transfers the data to the receiving application, through, for example, socket API.

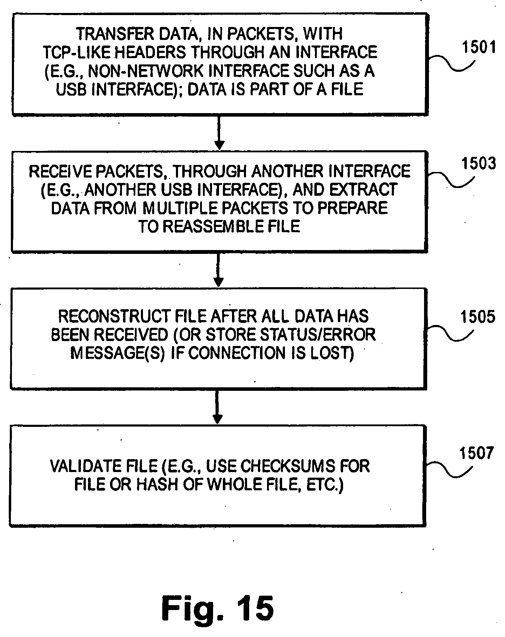

**Figure 15** provides an example of a method for exchanging files between the two devices. In this case, the data is typically not the structured data which is synchronized, such as contact information, etc. Rather, the data constitutes a complete file. In operation 1501, the data is transferred, in packets, with TCP-like headers through an interface, such as the interface 823 or the interface 847. These packets are received, through another interface on the other system and data is extracted from multiple packets to prepare to reassemble the file in operation 1503. Then in operation 1505, the file is reconstructed. This may occur after all the data for the file has been received or it may occur as the data is being received. If the connection is lost during the file transfer, an error message and/or status message is stored in order to indicate that the file was not successfully transferred so that it can be transferred when the devices are reconnected. The file may be validated after all the data for the file has been received or it may be validated in parts as it is received. The validation may be an optional operation, such as operation 1507 and may be performed by using, for example, conventional checksum operations or hash operations. The packets used in the method of **Figure 15** may include information which is part of the file transfer protocol. For example, the packets may include an indication of a packet type having a predetermined packet format and a packet functionality associated with the packet type. The packet functionality may specify an operation of the file transfer protocol software. The error message or status message if there is a disconnection may include at least an identifier of the file which was only partially transferred before the connection was interrupted so that the file can be transferred when connection is reestablished.

The following is a description of an implementation of the one or more embodiments shown in **Figures 8-13****,** **Figure 14B** and **Figure 15****;** this implementation allows a device and a host to communicate over USB. The implementation may be referred to as a Device Communication Protocol, which may be used to allow multiple services such as file transfer software 807 (e.g. for iTunes media sync) and structured data sync (such as synchronization software 805) to communicate simultaneously with the device without requiring additional USB endpoints. The Communication Protocol in this implementation is implemented as a vendor specific interface. The vendor specific interface utilizes two endpoints, a Bulk Input endpoint and a Bulk Output endpoint.

While the protocol is not precisely classic TCP, it does use TCP like mechanisms for flow control, connection establishment/termination and multiplexing.

An interface according to this Device Communication Protocol is identified by finding an interface where:
- The vendor ID of the device is Apple (0x05AC)
- The interface Class is Vendor Specific (255)
- The interface Subclass is 254
- The interface Protocol is 2

### Interface #1 - Vendor-specific

Alternate Setting 0
Number of Endpoints 2
Interface Class: 255 (Vendor-specific)
Interface Subclass; 254 (Vendor-specific)
Interface Protocol: 2
Endpoint 0x85 - Bulk Input
Address: 0x85 (IN)
Attributes: 0x02 (Bulk no synchronization data endpoint)
Max Packet Size: 512
Polling Interval: 0 (Endpoint never NAKs)
Endpoint 0x04 - Bulk Output
Address: 0x04 (OUT)
Attributes: 0x02 (Bulk no synchronization data endpoint)
Max Packet Size: 512
Polling Interval: 0 (Endpoint never NAKs)

### 1) Message Header

All data is sent in the form of messages. Every message starts with the following header. All headers are in network byte order.
AppleUSBMobileDeviceMessageHeader

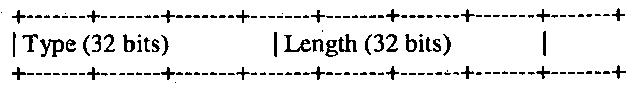

There are two defined message types:
0 - Version message
6 - TCP message

The length field is used to verify the received USB datagram was the right size. The length includes the size of the message header. USB sends data in packets. For bulk USB Endpoints, the maximum packet size is determined by the speed. As long as you keep sending full sized packets, the data is all considered to be part of a frame. In order to end a frame, a packet smaller than the maximum packet size should be sent. If a frame would normally end exactly on the boundary of two full sized packets (frame size % max packet size is 0), a zero length packet may be sent to denote the end of a frame. The length field in the header should match the size of the frame received. If it does not match, the frame should be discarded. An error should be logged to track the failure. In most cases, the subsequent frame will also be screwed up and have to be dropped. These errors should not occur. The loss will be detected with TCP messages and that TCP connection will be dropped.

### 2) Version Messages

Version messages are exchanged at the start to negotiate the version of the protocol to be used. When a device appears, it should wait for a version message. The host is responsible for sending the first version message. A version message has the following format:

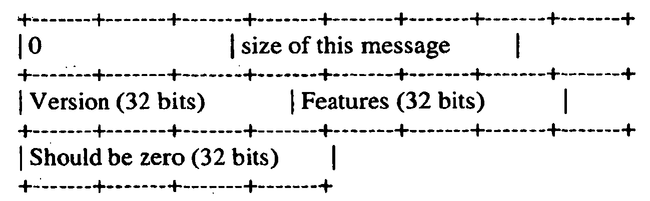

Version
Host->Device - Version Requested
Device->Host - Version supported
Features
Host->Device

A bitfield indicating the desired features.
Device->Host

A bitfield indicating the features that will be used

The host should set the Version to 1 for this implementation. The features should be zero since there are currently no supported features. In the future, features such as checksumming may be added without bumping the version. In addition, checksumming may be enabled using the feature field without defining a whole new version. The feature field is interpreted based on the version. Various bits in the Features field for version 1 may have a different meaning from Features in version 2. The host may request features by setting the corresponding bit in the Features field.

The device should respond with the version supported. The device may support only one version or it may support multiple versions. If the device supports the version requested by the host, the device should respond with that version. If the device only supports a different version, the device should respond with the version it supports. If the device responds with the requested version, the device should set the feature bitfield to the requested bits with any unsupported features masked out. If the response version does not match the requested version, the Features field should be zero.

If the device responds with a versions message that indicates a version that the host does not understand, the host may require newer software to communicate with the device. If the device responds with a different version from the requested version that the host does support, the host may send another version message with the newly negotiated version and bits set in the Features field to request specific features. The device should be prepared to handle multiple version messages.

### 3) TCP Messages

For data communication over USB, TCP messages are used. TCP messages are the AppleUSBMobileDeviceHeader where the protocol value is 6 and the size is set to the size of the entire message including the header. The AppleUSBMobileDeviceHeader is followed by a TCP header. Variable header lengths and TCP options are not currently supported.

The payload, if any follows the TCP header.

| | | | |
|---|---|---|---|
| 6 | size of this message | | |
| src port | dst port | sequence | |
| acknowledgment | | hl flags | window size |
| checksum | urgent pointer | | |

The urgent pointer and checksum fields are currently unused and should be set to zero in this implementation. Since USB is supposed to be reliable, acknowledgments are implicit. A pure ACK packet is sent to update the window.

### 3.1) Initiating a Connection

A connection is established by the host sending a TCP SYN packet to the device. The dst (destination) port is used to determine which service to connect to on the host. The src (source) port/dst port tuple should be unique to distinguish this connection from any other connections.

The device responds to the SYN packet with a SYN/ACK packet if the connection is accepted. The device may reject the connection request if there are insufficient resources or there is no service listening on the requested port. To reject the connection, the device should send a TCP RST.

A normal TCP connection involves a three way handshake. Since USB is supposed to be reliable, the third packet, the ACK from the Host to the Device may be dropped (not used) in this implementation. The device considers the connection established once it sends the SYN/ACK packet. The Host considers the connection established once it receives the SYN/ACK packet.

The sequence and acknowledgement numbers are incremented for SYN flags as they are in real (classic) TCP.

A window shift value of 8 is used though this option is not negotiated.

### 3.2) Terminating a connection

When the device or host wants to close a connection, it sends a TCP RST. In response to a TCP RST, a host or device should clean up any resources associated with the connection specified by the source and destination TCP ports.

The FIN flag is not used in this implementation. There is no half close in this implementation.

### 3.3) Sending data

The sequence and acknowledgement numbers are used for flow control. When the host or device sends a TCP message with a payload, the sequence number increments by the size of the payload sent. The host and device are not allowed to send data beyond the last acknowledged data plus the last advertised window. This is how flow control is implemented. It is assumed that any data sent will be received. There is no support for retransmits in this implementation. Alternative embodiments may use retransmission if this feature is desired. The side sending data may discard the local copy of the data once it has been sent.

### 3.4) Receiving data

Data is assumed to arrive in order. If the host or device receives an out of order transmission, based on the sequence number, the host should close the connection and send a TCP RST.

When the host or device has more buffer space available, it may send a TCP ACK packet with an updated window to indicate that the other side may send more data.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

## Claims

1. A computer readable medium containing executable program instructions to be executed on a data processing system (801), the medium comprising:
a first network stack software (815), to create packets for transmission through a first interface (817) on a data processing system (801) and to extract data from packets received through the first interface (817);
a second network stack software (821), to create (903) packets for transmission (905) through a second interface (823) on the data processing system (801) and extract (909) data from packets received though the second interface (823), the second network stack software (821) being configured to communicate with the first network stack software (815), wherein the second interface (823) is configured to be coupled to a third interface (847) on another system (803), the second network stack software (821) being configured to send data extracted from packets received through the second interface (823) through the first network stack software (815) and wherein the second network stack software (821) is configured to transmit and receive packets using a protocol designed for the second interface (823);
a file transfer protocol software (807), operatively coupled to communicate with the first network stack software (815) to receive the data extracted from the packets received through the second interface (823) and to reconstruct (911) a file from the data extracted from the packets;
wherein the first network stack software (815) and the second network stack software (821) are configured to allow multiple applications, including the file transfer protocol software (807), on the data processing system (801) to maintain multiple concurrent sessions through the second interface (823) and wherein the file is an audio or audiovisual media file.

2. The medium as in claim 1 wherein the file transfer protocol software (807) validates (911) the file after all data for the file has been received by at least one of a checksum operation or a hash operation.

3. The medium as in claim 2 wherein the packets include an indication of a packet type having a predetermined packet format and a packet functionality associated with the packet type.

4. The medium as in claim 3 wherein the packet functionality specifies an operation of the file transfer protocol software (807).

5. The medium as in claim 3 wherein a standard protocol of the second interface (823) does not use IP addresses and wherein the second interface (823) is one of a Universal Serial Bus (USB) compliant wired serial interface or a BLUETOOTH compliant wireless interface.

6. The medium as in claim 5 wherein the packets comprise Transmission Control Protocol (TCP) like headers and no IP compliant headers.

7. The medium as in claim 6 wherein the TCP like headers are associated with an opened socket for the file transfer protocol software (807).

8. The medium as in claim 1 wherein the first interface (817) is designed to be coupled to the Internet and the second interface (823) is not designed to use Internet Protocol (IP) addresses and wherein the first network stack software (815) comprises a TCP/IP stack and the second network stack software (821) comprises a TCP like stack which does not create IP headers.

9. The medium as in claim 8 wherein an error message is generated in response to a failure in transferring the complete file, the error message specifying the file.

10. A method performed by a data processing system (801), comprising the steps of:
by a first network stack software (815) stored on the data processing system (801); creating packets for transmission through a first interface (817) on the data processing system (801) and extracting data from packets received through the first interface (817);
by a second network stack software (821) stored on the data processing system (801); creating (903) packets for transmission (905) through a second interface (823) on the data processing system (801) and extracting (909) data from packets received though the second interface (823), the second network stack software (821) being configured to communicate with the first network stack software (815), wherein the second interface (823) is configured to be coupled to a third interface (847) on another system (803), the second network stack software (821) being configured to send data extracted from packets received through the second interface (823) through the first network stack software (815) and wherein the second network stack software (821) is configured to transmit and receive packets using a protocol designed for the second interface (823); and
by a file transfer protocol software (807) stored on the data processing system (801), operatively coupled to communicate with the first network stack software (815); receiving the data extracted from the packets received through the second interface (823) and reconstructing (911) a file from the data extracted from the packets;
wherein the first network stack software (815) and the second network stack software (821) are configured to allow multiple applications, including the file transfer protocol software (807), on the data processing system (801) to maintain multiple concurrent sessions through the second interface (823) and wherein the file is an audio or audiovisual media file.

11. The method of claim 10 further comprising steps performed on the data processing system (801) by the executable program instructions contained in the medium of any of claims 2-9.

12. A data processing system (801) comprising a computer readable medium containing executable program instructions, the system comprising :
a first interface (817);
a second interface (823)
a first network stack software (815), adapted to create packets for transmission through the first interface (817) and to extract data from packets received through the first interface (817);
a second network stack software (821), adapted to create (903) packets for transmission (905) through the second interface (823) and extract (909) data from packets received though the second interface (823), the second network stack software (821) being configured to communicate with the first network stack software (815), wherein the second interface (823) is configured to be coupled to a third interface (847) on another system (803), the second network stack software (821) being configured to send data extracted from packets received through the second interface (823) through the first network stack software (815) and wherein the second network stack software (821) is configured to transmit and receive packets using a protocol designed for the second interface (823);
a file transfer protocol software (807), operatively coupled to communicate with the first network stack software (815) to receive the data extracted from the packets received through the second interface (823) and to reconstruct (911) a file from the data extracted from the packets;
wherein the first network stack software (815) and the second network stack software (821) are configured to allow multiple applications, including the file transfer protocol software (807), on the data processing system (801) to maintain multiple concurrent sessions through the second interface (823) and wherein the file is an audio or audiovisual media file.

13. The data processing system of claim 12, further configured to use the medium of any one of claim 2-9.

## Patentansprüche

1. Computerlesbares Medium, welches ausführbare Programmanweisungen enthält zum Ausführen auf einem Datenverarbeitungssystem (801), wobei das Medium umfasst:
eine erste Netzwerkstack-Software (815) zum Erzeugen von Paketen zur Übertragung durch eine erste Schnittstelle (817) auf einem Datenverarbeitungssystem (801) und zum Extrahieren von Daten aus Paketen, die durch die erste Schnittstelle (817) empfangen wurden;
eine zweite Netzwerkstack-Software (821) zum Erzeugen (903) von Paketen zur Übertragung (905) durch eine zweite Schnittstelle (823) auf dem Verarbeitungssystem (801) und zum Extrahieren (909) von Daten aus Paketen, die durch die zweite Schnittstelle (823) empfangen wurden, wobei die zweite Netzwerkstack-Software (821) konfiguriert ist zum Kommunizieren mit der ersten Netzwerkstag-Software (815), wobei die zweite Schnittstelle (823) konfiguriert ist, um mit einer dritten Schnittstelle (847) auf einem anderen System (803) gekoppelt zu sein, wobei die zweite Netzwerkstack-Software (821) konfiguriert ist zum Senden von Daten, die aus Paketen extrahiert wurden, die durch die zweite Schnittstelle (823) durch die erste Netzwerkstag-Software (815) empfangen wurden, und wobei die zweite Netzwerkstack-Software (821) konfiguriert ist zum Übertragen und Empfangen von Paketen unter Verwendung eines Protokolls, welches für die zweite Schnittstelle (823) ausgestaltet ist;
eine Dateiübertragungsprotokoll-Software (807), die betriebsbereit gekoppelt ist zum Kommunizieren mit der ersten Netzwerkstack-Software (815), um die Daten zu empfangen, die aus den Paketen extrahiert wurden, die durch die zweite Schnittstelle (823) empfangen wurden, und um eine Datei aus den Daten, die aus den Paketen extrahiert wurden, zu rekonstruieren (911);
wobei die erste Netzwerkstack-Software (815) und die zweite Netzwerkstack-Software (821) konfiguriert sind, um mehreren Anwendungen zu erlauben, einschließlich der Datenübertragungsprotokoll-Software (807), auf dem Datenverarbeitungssystem (801) mehrere gleichzeitige Sitzungen durch die zweite Schnittstelle (823) beizubehalten und wobei die Datei eine Audio- oder eine audio-visuelle Mediendatei ist.

2. Medium nach Anspruch 1, wobei die Datenübertragungsprotokoll-Software (807) die Datei validiert (911), nachdem alle Daten für die Datei empfangen worden sind durch zumindest einen aus einer Prüfsummenoperation oder einer Hashoperation.

3. Medium nach Anspruch 2, wobei die Pakete einen Hinweis einer Paketart beinhalten, welche ein vorbestimmtes Paketformat und eine Paketfunktionalität aufweist, die mit der Paketart assoziiert ist.

4. Medium nach Anspruch 3, wobei die Paketfunktionalität eine Operation der Dateiübertragungsprotokoll-Software (807) spezifiziert.

5. Medium nach Anspruch 3, wobei ein Standardprotokoll der zweiten Schnittstelle (823) keine IP-Adressen verwendet und wobei die zweite Schnittstelle (823) eine ist aus einer Universal Serial Bus (USB)-konformen drahtgebundenen seriellen Schnittstelle oder einer Bluetooth-konformen drahtlosen Schnittstelle.

6. Medium nach Anspruch 5, wobei die Pakete Transmission Control Protocol (TCP)-ähnliche Header und keine IP-konforme Header umfassen.

7. Medium nach Anspruch 6, wobei die TCP-ähnlichen Header mit einem geöffneten Socket für die Dateiübertragungsprotokoll-Software (807) assoziiert sind.

8. Medium nach Anspruch 1, wobei die erste Schnittstelle (817) ausgestaltet ist, um mit dem Internet gekoppelt zu sein und die zweite Schnittstelle (823) nicht ausgestaltet ist, Internet Protocol (IP)-Adressen zu verwenden und wobei die erste Netzwerkstack-Software (815) einen TCP/IP-Stack umfasst und die zweite Netzwerkstack-Software (821) einen TCP-ähnlichen Stack umfasst, welcher keine IP-Header erzeugt.

9. Medium nach Anspruch 8, wobei eine Fehlernachricht in Antwort auf einen Fehler beim Übertragen der vollständigen Datei generiert wird, wobei die Fehlernachricht die Datei spezifiziert.

10. Verfahren, welches durch ein Datenverarbeitungssystem (801) durchgeführt wird, umfasst die Schritte von:
durch eine erste Netzwerkstack-Software (815), die auf dem Datenverarbeitungssystem (801) gespeichert ist;
Erzeugen von Paketen zur Übertragung durch eine erste Schnittstelle (817) auf dem Datenverarbeitungssystem (801) und Extrahieren von Daten aus Paketen, die durch die erste Schnittstelle (817) empfangen wurden;
durch eine zweite Netzwerkstack-Software (821), die auf dem Datenverarbeitungssystem (801) gespeichert ist;
Erzeugen (903) von Paketen zur Übertragung (905) durch eine zweite Schnittstelle (823) auf dem Datenverarbeitungssystem (801) und Extrahieren (909) von Daten aus Paketen, die durch die zweite Schnittstelle (823) empfangen wurden, wobei die zweite Netzwerkstack-Software (821) konfiguriert ist zum Kommunizieren mit der ersten Netzwerkstack-Software (815), wobei die zweite Schnittstelle (823) konfiguriert ist, um mit einer dritten Schnittstelle (847) auf einem anderen System (803) gekoppelt zu sein, wobei die zweite Netzwerkstack-Software (821) konfiguriert ist zum Senden von Daten, die aus Paketen extrahiert wurden, die durch die zweite Schnittstelle (823) durch die erste Netzwerkstack-Software (815) empfangen wurden, und wobei die zweite Netzwerkstack-Software (821) konfiguriert ist zum Übertragen und Empfangen von Paketen unter Verwendung eines Protokolls, welches für die zweite Schnittstelle (823) ausgestaltet ist; und
durch eine Dateiübertragungsprotokollsoftware (807), die auf dem Datenverarbeitungssystem (801) gespeichert ist, welche betriebsbereit gekoppelt ist zum Kommunizieren mit der ersten Netzwerkstack-Software (815); Empfangen der Daten, die aus den Paketen extrahiert wurden, die durch die zweite Schnittstelle (823) empfangen wurden und Rekonstruieren (911) einer Datei aus den Daten, die aus den Paketen extrahiert wurden;
wobei die erste Netzwerkstack-Software (815) und die zweite Netzwerkstack-Software (821) konfiguriert sind, um mehreren Anwendungen zu ermöglichen, einschließlich der Dateiübertragungsprotokoll-Software (807) auf dem Datenverarbeitungssystem (801) mehrere gleichzeitige Sitzungen durch die zweite Schnittstelle (823) beizubehalten, und wobei die Datei eine Audio- oder audio-visuelle Mediendatei ist.

11. Verfahren nach Anspruch 10 ferner umfassend Schritte, die auf dem Datenverarbeitungssystem (801) durch die ausführbaren Programminstruktionen, die auf dem Medium nach irgendeinem der Ansprüche 2 bis 9 enthalten sind, durchgeführt werden.

12. Datenverarbeitungssystem (801) umfassend ein computerlesbares Medium, welches ausführbare Programminstruktionen enthält, wobei das System umfasst:
eine erste Schnittstelle (817);
eine zweite Schnittstelle (823);
eine erste Netzwerkstack-Software (815), die angepasst ist, um Pakete zur Übertragung durch die erste Schnittstelle (817) zu erzeugen und Daten aus den Paketen, die durch die erste Schnittstelle (817) empfangen wurden, zu extrahieren;
eine zweite Netzwerkstack-Software (821), die angepasst ist, um Pakete zur Übertragung (905) durch die zweite Schnittstelle (823) zu erzeugen (903) und Daten aus Paketen zu extrahieren (909), die durch die zweite Schnittstelle (823) empfangen wurden, wobei die zweite Netzwerkstack-Software (821) konfiguriert ist zum Kommunizieren mit der ersten Netzwerkstack-Software (815), wobei die zweite Schnittstelle (823) konfiguriert ist, um mit einer dritten Schnittstelle (847) auf einem anderen System (803) gekoppelt zu sein, wobei die zweite Netzwerkstack-Software (821) konfiguriert ist zum Senden von Daten, die aus Paketen extrahiert wurden, die durch die zweite Schnittstelle (823) durch die erste Netzwerk-stack-Software (815) empfangen wurden und wobei die zweite Netzwerkstack-Software (821) konfiguriert ist zum Übertragen und Empfangen von Paketen unter Verwendung eines Protokolls, welches für die zweite Schnittstelle (823) ausgestaltet ist;
eine Datenübertragungsprotokoll-Software (807), die betriebsbereit gekoppelt ist zum Kommunizieren mit der ersten Netzwerkstack-Software (815) zum Empfangen der Daten, die aus den Paketen extrahiert wurden, die durch die zweite Schnittstelle (823) empfangen wurden, und zum Rekonstruieren (911) einer Datei aus den Daten, die aus den Paketen extrahiert wurden;
wobei die erste Netzwerkstack-Software (815) und die zweite Netzwerkstack-Software (821) konfiguriert sind, um mehreren Anwendungen zu ermöglichen, einschließlich der Dateiübertragungsprotokoll-Software (807), auf dem Datenverarbeitungssystem (801) mehrere gleichzeitige Sitzungen durch die zweite Schnittstelle (823) beizubehalten und wobei die Datei eine Audio- oder audio-visuelle Mediendatei ist.

13. Datenverarbeitungssystem nach Anspruch 12, ferner konfiguriert, um das Medium nach irgendeinem der Ansprüche 2 bis 9 zu verwenden.

## Revendications

1. Support lisible par ordinateur contenant des instructions de programme exécutables destinées à être exécutées sur un système informatique (801), le support comprenant :
- un premier logiciel de pile réseau (815) pour créer des paquets destinés à être émis via une première interface (817) sur un système informatique (801) et pour extraire des données contenues dans des paquets reçus via la première interface (817) ;
- un second logiciel de pile réseau (821) pour créer (903) des paquets destinés à être émis (905) via une deuxième interface (823) sur le système informatique (801) et pour extraire (909) des données contenues dans des paquets reçus via la deuxième interface (823), le second logiciel de pile réseau (821) étant configuré pour communiquer avec le premier logiciel de pile réseau (815), dans lequel la deuxième interface (823) est configurée pour être couplée à une troisième interface (847) sur un autre système (803), le second logiciel de pile réseau (821) étant configuré pour envoyer des données extraites de paquets reçus via la deuxième interface (823) par l'intermédiaire du premier logiciel de pile réseau (815) et dans lequel le second logiciel de pile réseau (821) est configuré pour émettre et recevoir des paquets en utilisant un protocole conçu pour la deuxième interface (823) ;
- un logiciel de protocole de transfert de fichiers (807), couplé fonctionnellement pour communiquer avec le premier logiciel de pile réseau (815) pour recevoir les données extraites des paquets reçus via la deuxième interface (823) et pour reconstituer (911) un fichier à partir des données extraites des paquets ;
- dans lequel le premier logiciel de pile réseau (815) et le second logiciel de pile réseau (821) sont configurés pour permettre à plusieurs applications, y compris le logiciel de protocole de transfert de fichiers (807), sur le système informatique (801) de maintenir plusieurs sessions simultanées via la deuxième interface (823) et dans lequel le fichier est un fichier multimédia audio ou audiovisuel.

2. Support selon la revendication 1, dans lequel le logiciel de protocole de transfert de fichiers (807) valide (911) le fichier après réception de toutes les données propres au fichier par au moins une opération parmi une opération par somme de contrôle et une opération par hachage.

3. Support selon la revendication 2, dans lequel les paquets comprennent une indication d'un type de paquet ayant un format de paquet prédéterminé et une fonctionnalité de paquet associés au type de paquet.

4. Support selon la revendication 3, dans lequel la fonctionnalité de paquet spécifie une opération du logiciel de protocole de transfert de fichiers (807).

5. Support selon la revendication 3, dans lequel un protocole standard de la deuxième interface (823) n'utilise pas des adresses IP et dans lequel la deuxième interface (823) est une interface série filaire conforme à la norme USB (Universal Serial Bus) ou une interface sans fil conforme à la norme BLUETOOTH.

6. Support selon la revendication 5, dans lequel les paquets comprennent des en-têtes de type TCP (Transmission Control Protocol) et pas d'en-têtes conformes à IP.

7. Support selon la revendication 6, dans lequel les en-têtes de type TCP sont associés à un connecteur logiciel ouvert pour le logiciel de protocole de transfert de fichiers (807).

8. Support selon la revendication 1, dans lequel la première interface (817) est conçue pour être couplée à l'Internet et la deuxième interface (823) n'est pas conçue pour utiliser des adresses IP (Internet Protocol) et dans lequel le premier logiciel de pile réseau (815) comprend une pile TCP/IP et le second logiciel de pile réseau (821) comprend une pile de type TCP qui ne crée pas des en-têtes IP.

9. Support selon la revendication 8, dans lequel un message d'erreur est généré en réponse à un échec de transfert du fichier complet, le message d'erreur spécifiant le fichier.

10. Procédé mis en oeuvre par un système informatique (801), comprenant les étapes dans lesquelles :
- un premier logiciel de pile réseau (815) stocké sur le système informatique (801) crée des paquets destinés à être émis via une première interface (817) sur le système informatique (801) et extrait des données contenues dans des paquets reçus via la première interface (817) ;
- un second logiciel de pile réseau (821) stocké sur le système informatique (801) crée (903) des paquets destinés à être émis (905) via une deuxième interface (823) sur le système informatique (801) et extrait (909) des données contenues dans des paquets reçus via la deuxième interface (823), le second logiciel de pile réseau (821) étant configuré pour communiquer avec le premier logiciel de pile réseau (815), dans lequel la deuxième interface (823) est configurée pour être couplée à une troisième interface (847) sur un autre système (803), le second logiciel de pile réseau (821) étant configuré pour envoyer des données extraites de paquets reçus via la deuxième interface (823) par l'intermédiaire du premier logiciel de pile réseau (815) et dans lequel le second logiciel de pile réseau (821) est configuré pour émettre et recevoir des paquets en utilisant un protocole conçu pour la deuxième interface (823) ; et
- un logiciel de protocole de transfert de fichiers (807), stocké sur le système informatique (801) et couplé fonctionnellement pour communiquer avec le premier logiciel de pile réseau (815) reçoit les données extraites des paquets reçus via la deuxième interface (823) et reconstitue (911) un fichier à partir des données extraites des paquets ;
- dans lequel le premier logiciel de pile réseau (815) et le second logiciel de pile réseau (821) sont configurés pour permettre à plusieurs applications, y compris le logiciel de protocole de transfert de fichiers (807), sur le système informatique (801) de maintenir plusieurs sessions simultanées via la deuxième interface (823) et dans lequel le fichier est un fichier multimédia audio ou audiovisuel.

11. Procédé selon la revendication 10, comprenant en outre des étapes mises en oeuvre sur le système informatique (801) par les instructions de programme exécutables contenues sur le support selon l'une quelconque des revendications 2 à 9.

12. Système informatique (801) comprenant un support lisible par ordinateur contenant des instructions de programme exécutables, le système comprenant :
- une première interface (817) ;
- une deuxième interface (823) ;
- un premier logiciel de pile réseau (815), conçu pour créer des paquets destinés à être émis via la première interface (817) et pour extraire des données contenues dans des paquets reçus via la première interface (817) ;
- un second logiciel de pile réseau (821), conçu pour créer (903) des paquets destinés à être émis (905) via la deuxième interface (823) et pour extraire (909) des données contenues dans des paquets reçus via la deuxième interface (823), le second logiciel de pile réseau (821) étant configuré pour communiquer avec le premier logiciel de pile réseau (815), dans lequel la deuxième interface (823) est configurée pour être couplée à une troisième interface (847) sur un autre système (803), le second logiciel de pile réseau (821) étant configuré pour envoyer des données extraites de paquets reçus via la deuxième interface (823) par l'intermédiaire du premier logiciel de pile réseau (815) et dans lequel le second logiciel de pile réseau (821) est configuré pour émettre et recevoir des paquets en utilisant un protocole conçu pour la deuxième interface (823) ;
- un logiciel de protocole de transfert de fichiers (807), couplé fonctionnellement pour communiquer avec le premier logiciel de pile réseau (815) pour recevoir les données extraites des paquets reçus via la deuxième interface (823) et pour reconstituer (911) un fichier à partir des données extraites des paquets ;
- dans lequel le premier logiciel de pile réseau (815) et le second logiciel de pile réseau (821) sont configurés pour permettre à plusieurs applications, y compris le logiciel de protocole de transfert de fichiers (807), sur le système informatique (801) de maintenir plusieurs sessions simultanées via la deuxième interface (823) et dans lequel le fichier est un fichier multimédia audio ou audiovisuel.

13. Système informatique selon la revendication 12, configuré en outre pour utiliser le support selon l'une quelconque des revendications 2 à 9.
